# EUROPÄISCHE PATENTSCHRIFT

(11) **EP 1 924 167 B1**
(45) Veröffentlichungstag und Bekanntmachung des Hinweises auf die Patenterteilung: **08.11.2017**
(21) Anmeldenummer: 06775157.8
(22) Anmeldetag: 28.08.2006
(51) Int. Cl.: A46B 5/02

(54) **HANDGRIFF FÜR EINE BÜRSTE, INSBESONDERE ZAHNBÜRSTE**
HANDLE FOR A BRUSH, IN PARTICULAR A TOOTHBRUSH
POIGNEE DE BROSSE, NOTAMMENT DE BROSSE A DENTS

(30) Priorität: 16.09.2005 EP 05020182; 08.02.2006 CH 1982006
(43) Veröffentlichungstag der Anmeldung: 28.05.2008
(73) Patentinhaber: Trisa Holding AG, 6234 Triengen (CH)
(72) Erfinder: BÄRTSCHI, Armin, CH-4652 Winznau (CH); ZWIMPFER, Martin, CH-6004 Luzern (CH); HILFIKER, Christian, CH-6234 Triengen (CH)
(74) Vertreter: Schaad, Balass, Menzl & Partner AG
(86) Internationale Anmeldenummer: PCT/CH2006/000464
(87) Internationale Veröffentlichungsnummer: WO 2007/030958

(56) Entgegenhaltungen:
- WO-A1-98/35809
- DE-U1- 8 903 911
- US-B1- 6 687 940

## Beschreibung

Die vorliegende Erfindung bezieht sich auf ein Verfahren zur Herstellung eines Handgriffs für ein Bürstenprodukt, einen Handgriff für ein Bürstenprodukt sowie der Verwendung eines solchen Handgriffs gemäss den Ansprüchen 1, 13und 26.

Handgriffe sind allgemein bekannte Gegenstände, die einer verbesserten Handhabung von Bürsten und Körperpflegegeräten, insbesondere von Zahnbürsten im Allgemeinen dienen.

Eine Zahnbürste mit einem Handgriff ist beispielsweise in der EP-B-1119272 beschrieben. Dabei ist der Handgriff als ein zweiteiliger Hohlkörper ausgebildet und weist dazu wenigstens zwei Handgriffteile aus einem elastisch nachgiebigem Material auf, die schalenförmig einen Hohlraum umschliessen. Die zweiteilige Konstruktion des Handgriffs ist allerdings mit dem Nachteil verbunden, dass ein zusätzlicher Arbeitsgang zum Zusammenfügen der Handgriffteile eingeführt werden muss und sich dadurch die Zykluszeit bei der Herstellung einer derartigen Zahnbürste vergrössert, was wiederum zu erhöhten Herstellungskosten führt.

Verpackungen, insbesondere Gruppenverpackungen für Zahnbürsten, sind ebenfalls allgemein bekannt. Eine Gruppenverpackung ist beispielsweise in der WO-A-01/70590 beschrieben. In dieser Gruppenverpackung ist eine Anzahl von Zahnbürsten in einer gemeinsamen Blisterhaube aus Kunststoff, die rückwärtig von einem Blisterträger verschlossen ist, aufbewahrt. Blisterhauben (auch kurz Blister) werden auf bekannte Weise mittels Tiefziehen aus vorzugsweise transparenten Kunststofffolien hergestellt und können wenigstens näherungsweise die Form des zu verpackenden Produkts aufweisen. Die Blisterhaube und der Blisterträger einer Einzelverpackung sind umlaufend perforiert, so dass jede Einzelverpackung entnommen werden kann. Allerdings eignet sich die beschriebene Gruppenverpackung nur zur einseitigen Präsentation der Zahnbürsten von der Seite der Blisterhaube aus. Die Entnahme der Einzelverpackungen ist mit einem erheblichen Kraftaufwand zum Durchtrennen der umlaufenden Perforation verbunden.

In der WO 98/35809 wird des Weiteren ein Verfahren zur Herstellung eines Formteils, insbesondere einer Zahnbürste, aus zwei Komponenten (z.B. einem Kunststoff und einem Elastomer) beschrieben, bei welchem nach innen gerichtete Kerne werden verwendet, um einen hohlen Zahnbürstenkörper zu bilden und bei welchem das Elastomer eingespritzt wird, um bestimmte Oberflächencharakteristika zu bilden. Der fertige Zahnbürstenkörper kann eine sperrige Form aufweisen, allerdings ist er aufgrund der hohlen Ausgestaltung leicht.

Aufgabe der vorliegenden Erfindung ist es, einen Handgriff für Bürste, eine Zahnbürste bzw. eine Haushaltsbürste und eine Haushaltsbürste bereitzustellen, der bzw. die besonders leicht aber voluminös und daher einfach zu handhaben ist und innerhalb einer kurzen Standzeit auf einer Spritzgussmaschine bei geringen Materialkosten preiswert hergestellt werden kann.

Diese Aufgaben werden gelöst durch ein Verfahren zur Herstellung eines Handgriffs für ein Bürstenprodukt, einen Handgriff für ein Bürstenprodukt sowie die Verwendung eines solchen Hanggriffs gemäss den Ansprüchen 1, 13 und 26.

Der erfindungsgemässe Handgriff für ein Bürstenprodukt, wie z.B. eine Bürste, eine Zahnbürste bzw. eine Haushaltsbürste ist mit einem einstückigen Griffkörper ausgestattet, dessen Wand einen Hohlraum im länglichen Griffkörper umgibt. Die Wand ist durch mindestens zwei gegeneinander versetzte und durch die Wand durchgehende Ausnehmungen, die in dem Hohlraum münden, geöffnet. Durch den inneren Hohlraum entsteht ein voluminöser und zugleich ergonomisch vorteilhafter Handgriff mit einem besonders geringen Gewicht, der aufgrund des verringerten Materialeinsatzes, gegenüber einer Zahnbürste mit einem soliden, das heisst mit Material "gefüllten", Handgriff, innerhalb einer kurzen Zykluszeit, das heisst Standzeit auf der Spritzgiessmaschine besonders kostengünstig herstellbar ist. Darüber hinaus wird durch die geringe Materialstärke der Wand die Gefahr von Einfallstellen und Einschlüssen sowie der Effekt der Wärmeschrumpfung reduziert, was wiederum zu einer erhöhten Oberflächengüte und gleich bleibenden Produktqualität führt.

Die Bürste, Zahnbürste bzw. Haushaltsbürste ist mit einem Bürsten- bzw. Zahnbürstenkörper ausgestattet, die neben einem mit Borsten bestandenen Kopf und einem Hals einen derartigen Handgriff aufweist. Der Bürsten- bzw. Zahnbürstenkörper wird mit dem Handgriff zusammen in einem Ein- oder Mehrkomponenten-Spritzgiessverfahren gefertigt.

Bei einem erfindungsgemässen Verfahren zur Herstellung eines derartigen Handgriffs für ein Bürstenprodukt wird in dem Spritzgiessverfahren für Kunststoff ein Spritzgusswerkzeug mit Fingerelementen eingesetzt. Im geschlossenen Zustand des Spritzgusswerkzeugs berühren sich die Fingerelemente und verhindern an diesen Berührungsstellen den Durchfluss von Kunststoff. Im verfestigten Kunststoffmaterial werden dadurch Ausnehmungen ausgeformt, die untereinander verbunden sind und im Griffkörper einen zusammenhängenden Hohlraum bilden. Im Gegensatz zu konventionellen Herstellungsverfahren für hohle Kunststoffkörper können dabei stehende Kerne eingesetzt werden. Beim erfindungsgemässen Verfahren kann auf ein Zusammenfügen von zwei einzeln hergestellten Griffkörperteilen verzichtet werden.

Bei einem Verfahren zur Herstellung einer Haushaltsbürste mit einem hohlen Handgriff wird zusammen mit dem Handgriff ein Hals und ein Kopf aus Kunststoff im Spritzgiessverfahren ausgeformt.

Besonders bevorzugte Ausführungsformen der Erfindung sind mit den in den abhängigen Ansprüchen aufgeführten Merkmalen ausgestattet.

Einige besondere bevorzugte Ausführungsformen werden im Folgenden anhand einer Zeichnung detailliert beschrieben. Es zeigen rein schematisch:
- Fig. 1: eine Draufsicht auf eine Zahnbürste mit einem Handgriff, der rechteckförmige Ausnehmungen in einer Wand, die einen innenliegenden Hohlraum umschliesst, aufweist;
- Fig. 2: eine Seitenansicht der in Fig. 1 gezeigten Zahnbürste;
- Fig. 3: eine Draufsicht auf die Unterseite der in Fig. 1 und Fig. 2 gezeigten Zahnbürste;
- Fig. 4: eine Schnittdarstellung entlang der in Fig. 3 eingezeichneten Schnittebene IV - IV der in Fig. 1 bis Fig. 3 gezeigten Zahnbürste;
- Fig. 5: einen Querschnitt durch die in Fig. 1 bis Fig. 4 gezeigte Zahnbürste entlang der in Fig. 4 eingezeichneten Schnittebene V - V;
- Fig. 6: eine Seitenansicht einer weiteren Ausführungsform eines Kopfes für die in Fig. 1 bis Fig. 5 gezeigte Zahnbürste mit aufStegen der Oberseite- und der Unterseite des Zahnbürstenkopfsangeordneten Reinigungs- bzw. Massageelementen, wobei die Stege auf der Unterseite als Zungenreinigerrippen ausgebildet sind;
- Fig. 7: eine Draufsicht auf eine weitere Ausführungsform einer Zahnbürste mit einem Hohlraum im Griffkörper;
- Fig. 8: eine Seitenansicht der in Fig. 7 dargestellten Zahnbürste;
- Fig. 9: eine Draufsicht auf die Unterseite der in Fig. 7 - Fig. 8 dargestellten Zahnbürste;
- Fig. 10: einen Querschnitt der in Fig. 7 bis Fig. 9 gezeigten Zahnbürste entlang der in Fig. 8 eingezeichneten Schnittebene X - X;
- Fig. 11: einen Querschnitt der in Fig. 7 bis Fig. 9 gezeigten Zahnbürste entlang der in Fig. 8 eingezeichneten Schnittebene XI - XI;
- Fig. 12: eine Schnittdarstellung eines Spritzgusswerkzeugs zur Herstellung der in Fig. 7 bis Fig. 11 gezeigten Zahnbürste entlang der in der Zahnbürste in Fig. 8 eingezeichneten Schnittebene X - X;
- Fig. 13: eine Teildarstellung einer Draufsicht auf eine weitere Ausführungsform einer Zahnbürste mit dem in Fig. 7 bis Fig. 9 gezeigten Handgriffs und einem beidseitig, am Hals und am Kopf befestigten Zungenelement;
- Fig. 14a: eine Draufsicht auf eine weitere Ausführungsform eines Kopfes einer Zahnbürste mit Zungenausnehmungen zur Bildung eines brückenartigen Zungenelements;
- Fig. 14b: eine Seitenansicht des in Fig. 14a gezeigten Kopfes mit Zungenreinigerrippen auf der Unterseite;
- Fig. 14c: eine Draufsicht auf die Unterseite des in Fig. 14a und Fig. 14b gezeigten Kopfes;
- Fig. 14d: einen Querschnitt durch den in Fig. 14a bis Fig. 14c gezeigten Kopf entlang der in Fig. 14a eingezeichneten Schnittebene XVII - XVII;
- Fig. 15: eine Draufsicht auf eine weitere Ausführungsform eines Zahnbürstenkörpers mit zwei seitlich am Zungenelement angeordneten Zungenstegen zur wippenartigen Lagerung des Zungenelements;
- Fig. 16 - Fig. 21: weitere Ausführungsformen von Zahnbürstenköpfen mit am Kopf verschiedenartig ausgeformten Zungenelementen;
- Fig. 22: eine Draufsicht auf eine weitere Ausführungsform eines Kopfes einer Zahnbürste mit einer S-förmigen Zungenausnehmung zur Bildung von zwei zinkenartigen Zungenelementen;
- Fig. 23: eine Draufsicht auf die Unterseite des in Fig. 22 gezeigten Kopfes;
- Fig. 24: eine Seitenansicht des in Fig. 22 und Fig. 23 gezeigten Kopfes;
- Fig. 25: eine Draufsicht auf die Oberseite einer weiteren Ausführungsform einer Zahnbürste mit einer zentralen Reihe rechteckiger Ausnehmungen und zwei länglichen, seitlich im Handauflageabschnitt angeordneten Ausnehmungen;
- Fig. 26: eine Seitenansicht der in Fig. 25 dargestellten Zahnbürste;
- Fig. 27: eine Draufsicht auf die Unterseite der in Fig. 25 und Fig. 26 dargestellten Zahnbürste;
- Fig. 28: einen Querschnitt entlang der in Fig. 26 und Fig. 27 eingezeichneten Schnittebene XXVIII - XXVIII;
- Fig. 29: einen Querschnitt der in Fig. 25 bis Fig. 27 gezeigten Zahnbürste entlang der in Fig. 26 und Fig. 27 mit XXIX - XXIX bezeichneten Schnittebene;
- Fig. 30: einen Querschnitt durch ein Spritzgusswerkzeug zur Herstellung der in Fig. 25 bis Fig. 29 gezeigten Zahnbürste entlang der in Fig. 26 und Fig. 27 mit XXVIII - XXVIII bezeichneten Schnittebene;
- Fig. 31: eine Seitenansicht auf einen entlang der in Fig. 32 mit XXXI - XXXI bezeichneten Schnittebene angeschnittenen Handauflageabschnitt eines erfindungsgemässen Handgriffs mit in umlaufenden Nuten angeordneten, einen Hohlraum bildenden Ausnehmungen;
- Fig. 32: eine Draufsicht auf den in Fig. 31 gezeigten Handgriff;
- Fig. 33: einen Längsschnitt durch eine Zahnbürste mit Nuten, Durchgangslöchern und einer zur Unterseite geöffneten Sacklochausnehmung;
- Fig. 34: eine Draufsicht auf die Unterseite der in Fig. 33 gezeigten Zahnbürste;
- Fig. 35: eine Seitenansicht der in Fig. 33 und Fig. 34 gezeigten Zahnbürste;
- Fig. 36: eine Draufsicht auf die Oberseite der in Fig. 33 bis Fig. 35 gezeigten Zahnbürste;
- Fig. 37: einen Querschnitt durch die in Fig. 33 bis Fig. 36 gezeigte Zahnbürste entlang der mit XXXVII - XXXVII bezeichnete Schnittebene in Fig. 36;
- Fig. 38: einen weiteren Querschnitt der in Fig. 36 gezeigten Zahnbürste entlang der Schnittebene XXXVIII - XXXVIII;
- Fig. 39: einen weiteren Querschnitt der in Fig. 36 gezeigten Zahnbürste entlang der Schnittebene XXXIX - XXXIX;
- Fig. 40: eine Draufsicht auf die Oberseite einer weiteren Ausführungsform einer Zahnbürste mit im Handgriff winklig in einer Reihe angeordneten, rechteckförmigen Ausnehmungen.
- Fig. 41: eine Draufsicht auf eine Werkzeughälfte eines Spritzgusswerkzeuges zur Herstellung der in Fig. 1 bis Fig. 5 gezeigten Zahnbürste;
- Fig. 42: eine Draufsicht auf eine Werkzeughälfte, die mit der oberen, in Fig. 41 gezeigten Werkzeughälfte zur Ausformung der in Fig. 1 bis Fig. 5 dargestellten Zahnbürste zusammenwirkt;
- Fig. 43: eine Längsschnittdarstellung durch ein Spritzgusswerkzeug mit den in Fig. 41 und Fig. 42 zusammengefügten Werkzeughälften, bei dem Fingerelemente sich berührend zahnartig ineinander eingreifen;
- Fig. 44: einen Querschnitt durch das in Fig. 43 gezeigte Spritzgusswerkzeug entlang der in Fig. 43 eingezeichneten Schnittebene XLIV - XLIV;
- Fig. 45: eine Seitenansicht einer Kopfhalterung zur Befestigung des Kopfes einer Zahnbürste während der Beborstung;
- Fig. 46: eine Draufsicht auf die in Fig. 45 gezeigte Kopfhalterung;
- Fig. 47: eine Seitenansicht der in Fig. 45 und Fig. 46 gezeigten Kopfhalterung mit einem eingespannten Kopf;
- Fig. 48: eine Draufsicht auf die in Fig. 45 und Fig. 46 gezeigte Kopfhalterung mit einem eingespannten Kopf;
- Fig. 49: einen Schnitt durch die in Fig. 45 bis Fig. 48 gezeigte Kopfhalterung entlang der in Fig. 48 eingezeichneten Schnittebene XLIX- XLIX;
- Fig. 50: eine Draufsicht auf eine weitere Kopfhalterung für einen Kopf mit einem Ansaugstutzen zur Fixierung eines Zungenelements;
- Fig. 51: eine Schnittdarstellung durch die in Fig. 50 gezeigte Kopfhalterung entlang der dort mit LI - LI bezeichneten Schnittebene, mit einem eingespannten Kopf;
- Fig. 52: eine Draufsicht auf eine Gruppenverpackung für Körperpflegegeräte mit acht Einzelverpackungen;
- Fig. 53: eine Draufsicht auf eine Gruppenverpackung mit sechs Einzelverpackungen, wobei ein Gruppenträger mit zwei Falzlinien entlang von Spalten, die jeweils Paare von Einzelverpackungen trennen, ausgestattet ist;
- Fig. 54: eine perspektivische Darstellung eines Präsentationskörpers der durch Faltung der in Fig. 53 gezeigten Gruppenverpackung entlang der Falzlinien gebildet wird;
- Fig. 55: eine Seitenansicht einer weiteren Ausführungsform einer Gruppenverpackung mit einem rahmenartigen Gruppenträger, bei dem jeweils zwei Einzelverpackungen zusammengefasst und mit einem dreieckigen Dachsegment ausgestattet sind;
- Fig. 56: eine Seitenansicht eines turmartigen Präsentationskörpers mit einem pyramidenförmigen Dach, der durch Faltung der in Fig. 55 gezeigten Gruppenverpackung gebildet wurde;
- Fig. 57: eine Seitenansicht einer Abwaschbürste mit Ausnehmungen am Handgriff und Hals;
- Fig. 58: ein Längsschnitt durch die in Fig. 1 gezeigte Abwaschbürste mit zwei innenliegenden Hohlräumen;
- Fig. 59: eine Draufsicht auf die Unterseite der in Fig. 57 und Fig. 58 gezeigten Abwaschbürste;
- Fig. 60: einen Querschnitt durch den Handgriff der in Fig. 57 bis Fig. 59 gezeigten Abwaschbürste entlang der in Fig. 59 mit LX - LX bezeichneten Schnittebene;
- Fig. 61: eine Seitenansicht einer weiteren Ausführungsform einer Abwaschbürste mit im Wesentlichen dreiecksförmigen Ausnehmungsöffnungen am Handgriff und im Wesentlichen trapezförmigen Ausnehmungsöffnungen am Hals;
- Fig. 62: eine Draufsicht auf die Unterseite der in Fig. 61 gezeigten Abwaschbürste;
- Fig. 63: eine Seitenansicht einer weiteren Ausführungsform einer Abwaschbürste mit im Wesentlichen rechteckförmigen bzw. einseitig abgerundeten Ausnehmungsöffnungen; und
- Fig. 64: eine Draufsicht auf die Unterseite der in Fig. 63 gezeigten Abwaschbürste.

Die im Folgenden beschriebenen Zahnbürsten 10 sind mit einem erfindungsgemässen Handgriff 12 ausgestattet. Ein hohler Griffkörper 13 des Handgriffs 12 ist dabei als Teil eines Zahnbürstenkörpers 14, der an seinem löffelartig abgeflachten Kopf 16 mit Borsten 18 besetzt ist, ausgeformt. Über einen Hals 20 ist der Griffkörper 13 mit dem Kopf 16 verbunden.

Der Handgriff 12 dient dem Halten der Zahnbürste 10 mit einer Hand und nimmt zwischen 45% und 65% der Gesamtlänge der Zahnbürste 10 ein. Der Handgriff 12 weist eine länglich, ellipsoidförmige Aussenkontur auf und erstreckt sich von einem freien, dem Kopf 16 gegenüberliegenden Ende über einen Handauflageabschnitt 22 und eine Daumenauflage 24 bis zum Ansatz des Halses 20. Die Gesamtlänge des Handgriffs 12 beträgt zwischen 80 mm und 140 mm, vorzugsweise zwischen 110 mm und 120 mm. Der Handgriff 12 ist durch seine voluminöse und abgerundete Form ergonomisch besonders vorteilhaft ausgebildet und unterstützt eine einfache und komfortable Benutzung der Zahnbürste 10. Die Gesamtlänge der Zahnbürste 10 beträgt zwischen 120 mm und 230 mm, vorzugsweise 190 mm bis 200 mm.

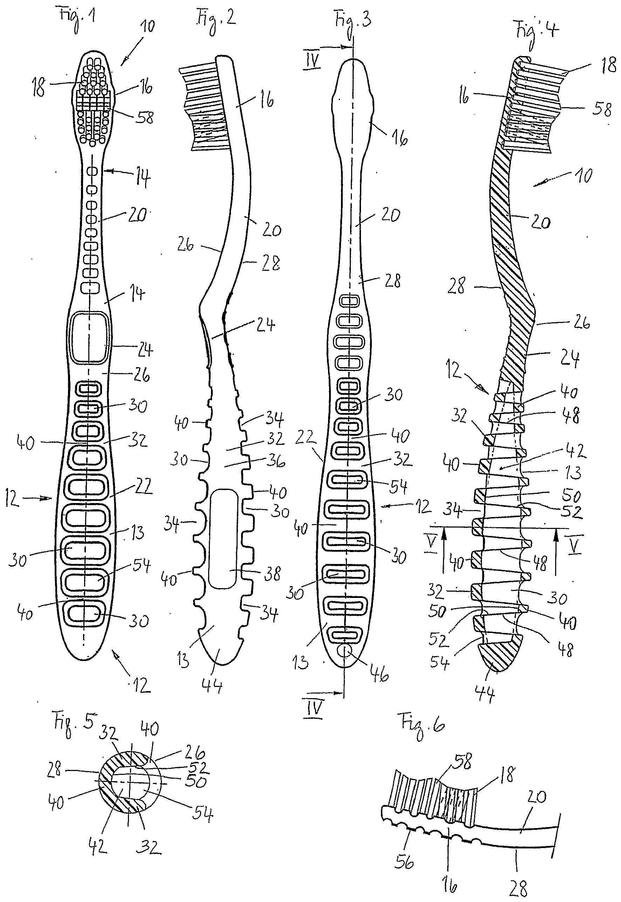

Wie insbesondere in Fig. 1 und Fig. 3 gezeigt, sind auf der mit Borsten 18 besetzten Oberseite 26 bzw. auf der gegenüberliegenden Unterseite 28 abgerundete, im Wesentlichen rechteckförmige und gesenkte Ausnehmungen 30 in einer Wand 32 des Griffkörpers 13 ausgeformt. Die Ausnehmungen 30 sind dabei im Handauflageabschnitt 22 entlang der Längsachse des Griffkörpers 13 in nahezu gleichen Abständen voneinander aufgereiht. Durch sich auf der Oberseite 26 und der Unterseite 28 versetzt gegenüberliegende Ausnehmungen 30 können geradlinige Durchlässe durch den Griffkörper 13 hindurch gebildet werden. Die auf der Oberseite 26 bzw. Unterseite 28 sichtbare Breite der Ausnehmungen 30 ist dabei jeweils dem Umfang des Griffkörpers 13 an ihrer jeweiligen Position angepasst. Sie beträgt entlang der Längsachse des Griffkörpers 13 gemessen 2,5 mm bis 140 mm, auf der Oberseite 26 vorzugsweise 4,1 mm bis 8 mm bzw. 60 mm bis 85 mm, und auf der Unterseite 28 vorzugsweise 3,9 mm bis 4,8 mm bzw. 45 mm bis 70 mm.

Wie in Fig. 2 und Fig. 4 gezeigt, bilden die Ausnehmungen 30 aufgrund der ellipsoidförmigen Aussenkontur des Handgriffs 12, insbesondere in der Seitenansicht bzw. im Längsschnitt sichtbare Einbuchtungen 34. Die zur Oberseite 26 geöffneten Ausnehmungen 30 bzw. Einbuchtungen 34 sind dabei nicht nur in Umfangsrichtung, sondern auch in Längsrichtung des Handgriffs 12 bezüglich den ihnen gegenüberliegenden Ausnehmungen 30, die zur Unterseite 28 hin geöffnet sind, versetzt angeordnet.

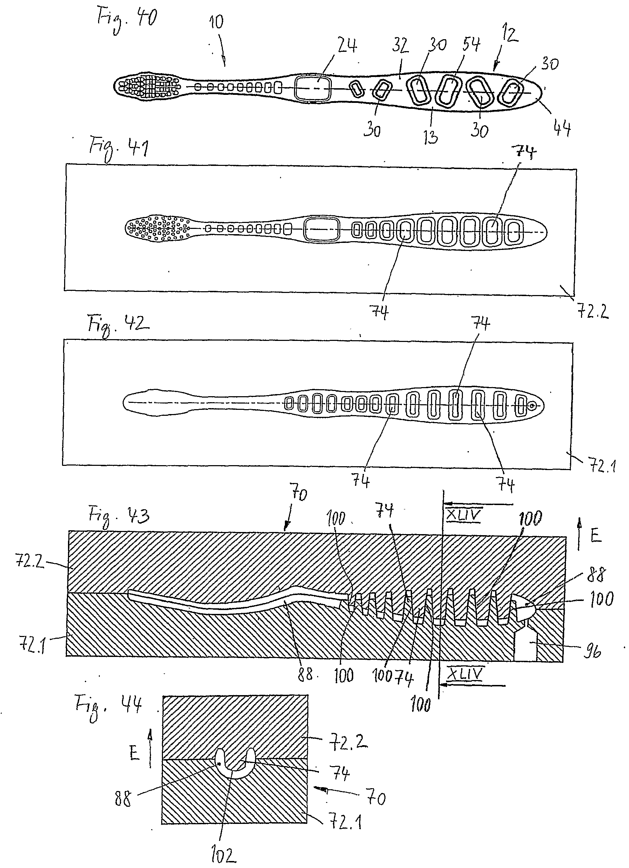

Auf einem Seitenabschnitt 36 der Wand 32 ist zwischen den Einbuchtungen 34 der Oberseite 26 und der Unterseite 28 ein abgerundetes, rechteckiges Prägefeld 38 angeordnet. Dieses Prägefeld 38 dient der Beschriftung, vorzugsweise mit Marken-, Hersteller- bzw. Typenangaben. Aufgrund der Ausnehmungen 30, die zur Oberseite 26 und zur Unterseite 28 der Zahnbrüste 10 geöffnet sind, ist es nicht möglich das Prägefeld 38 auf diesen Zahnbürstenseiten anzuordnen ohne eine neue Materialanhäufung zu erzeugen. Aus diesem Grund ist das Prägefeld 38 auf der seitlichen Wand 32 platziert. Diese Gestaltung erfordert bei der Herstellung in einem Spritzgusswerkzeug den Einsatz eines Seitenschiebers. Der Seitenschieber bewirkt dabei eine Überdeckung bzw. Auftrennung einer herstellungsbedingt seitlich um den Handgriff 12 sowie weiter um die gesamte Zahnbürste 10 umlaufenden Formtrennlinie (in Fig. 43 und Fig. 44 nicht gezeigt) zur Bildung des Prägefeldes 28.

Die Ausnehmungen 30 bzw. die durch sie in der Wand 32 hervorgerufenen Einbuchtungen 34, sind durch Stege 40 voneinander beabstandet. Auf der Oberseite 26 sind bei der in Fig. 1 bis Fig. 4 gezeigten Ausführungsform acht Stege 40 und auf der Unterseite 28 neun Stege 40 ausgebildet. Alternativ können jedoch auf der Oberseite 26 auch eins bis zwölf Stege 40, auf der Unterseite 28 eins bis dreizehn Stege 40 ausgeformt sein. Die Stege 40 auf der Oberseite 26 der Zahnbürste 10 haben vorzugsweise nahezu die gleiche Ausdehnung in Längsrichtung des Griffkörpers 13. Diese Ausdehnung (oder auch Breite) beträgt auf der Oberseite 26 1,5 mm bis 6 mm, vorzugsweise 2 mm bis 4,5 mm. Auf der gegenüberliegenden Unterseite 28 weisen die Stege 40 eine Breite zwischen 1 mm und 7 mm, vorzugsweise zwischen 2 mm und 5,5 mm auf. Die Materialstärke der Stege 40 beträgt rechtwinklig zur Längsachse des Griffkörpers 13 gemessen 1 mm bis 5,5 mm, vorzugsweise 2 mm bis 4 mm. Die Materialstärke ist dabei, wie in Fig. 4 gezeigt, auf beiden Seiten des Griffkörpers 13 nahezu konstant.

Wie in der Schnittdarstellung von Fig. 4 gezeigt, münden die Ausnehmungen 30 nach ihrem Durchtritt durch die Wand 32 in einen zusammenhängenden Hohlraum 42. Der Hohlraum 42 ist, wie auch der Griffkörper 13 selbst, länglich ausgeformt und erstreckt sich nahezu entlang der Längsachse des Griffkörpers 13. Der Hohlraum 42 ist durch die Ausnehmungen 30 zur Umgebung hin geöffnet. In seinen längsseitigen Endbereichen ist er einerseits durch die Daumenauflage 24 und andererseits durch ein abgerundetes Endstück 44, an dem sich, wie in Fig. 3 gezeigt, ein von der Herstellung der Zahnbürste 10 resultierender Anspritzpunkt 46 befindet, begrenzt. Als Alternative ist es auch möglich, das Endstück 44 nicht zu gestalten beziehungsweise wegzulassen, das heisst den Hohlraum 42 gegen sein Ende nicht abzuschliessen und auf diese Weise dem Benutzer einen Blick in den Innenraum zu ermöglichen und / oder damit eine Standfläche zum aufrechten Abstellen der Zahnbürste 10 zu erzeugen. In einer weiteren möglichen Ausführungsform können im Hohlraum 42 Gegenstände eingelegt werden, zum Beispiel kann eine zusammendrückbare Kugel aus Weichmaterial in den Hohlraum 42 eingesetzt werden, welche sich beim Gebrauch bewegt.

Im Hohlraum 42 sind quer zur Längsachse des Hohlraums 42 orientierte und jeweils paarweise konisch zusammenlaufende Querrippen 48 sichtbar. Diese Querrippen 48 sind durch den Herstellungsprozess, der später im Detail beschrieben wird, bedingt. Die Querrippen 48 münden jeweils in die Stege 40 der Oberseite 26 und der Unterseite 28, die entlang der Längsrichtung des Griffkörpers 13 gegeneinander versetzt ausgebildet sind. Diese Querrippen 48 ermöglichen eine Einstellung/Definition der Flexibilität des den Hohlraum 42 umgebenden, aus Kunststoff hergestellten Griffkörpers 13. Durch Veränderung der Winkligkeit, der Materialstärke und der Grösse kann die Flexibilität/Stabilität des Griffkörpers 13 grundlegend beeinflusst werden.

In Fig. 5 ist ein Querschnitt des Handgriffs 12 der in Fig. 1 bis Fig. 4 gezeigten Zahnbürsten 10 entlang der in Fig. 4 eingezeichneten Schnittebene V - V dargestellt. Neben der im Querschnitt nahezu kreisförmigen Aussenkontur der Wand 32, weist auch die Innenkontur der Wand 32 und somit der Hohlraum 42 einen nahezu kreisförmigen Querschnitt auf. Die angeschnittene Wand 32 besitzt im nahezu gesamten angeschnittenen Bereich eine im Wesentlichen konstante Materialstärke. Sie beträgt, wie bei den in ihr ausgeformten Stegen 40, vorzugsweise 1 mm bis 5,5 mm, vorzugsweise 2 mm bis 4 mm. Die angeschnittene Ausnehmung 30 ist sacklochartig ausgebildet und weist einen abgerundeten Ausnehmungsboden 50 auf. Ihre abgerundeten Ausnehmungswände 52, die sich von Ausnehmungsöffnungen 54 an der äusseren Oberfläche des Griffkörpers 13 bis zu den Ausnehmungsböden 50 hin ausdehnen, sind durch die Seitenabschnitte 36 der Wand 32 geformt. Da sich die Ausnehmungswände 52 in den Hohlraum 42 hinein erstrecken, wird auch die Kontur des Hohlraums 42 durch alternative Gestaltungsformen der Ausnehmungswände 52 geändert.

Der Griffkörper 13 kann aus Weichmaterial oder Hartmaterial oder einer Kombination aus Weich- und Hartmaterial geformt sein. Um eine optimale Verteilung der Materialien zu gewährleisten, werden die durchgehenden Seitenabschnitte 36 bzw. Wände 32 der Zahnbürste 10 als Verteilkanäle für den flüssigen Kunststoff benutzt, insbesondere für eine Verteilung des Weichmaterials, welches vorzugsweise nach dem Hartmaterial eingespritzt wird. Bei einer weiteren bevorzugten Ausführungsform werden die Querstege 40 aus Weichmaterial oder einer Kombination aus Hart- und Weichmaterial gespritzt. Bei einer mindestens partiellen Ausgestaltung der Griffrippen 60 mit Weichmaterial erhält der Handgriff 12 eine Flexibilität, welche es ermöglicht, dass sich die Wände 32 in Richtung ihrer Flächennormalen bewegen lassen.

In Fig. 6 ist eine weitere Ausführungsform eines Kopfes 16 für die in Fig. 1 bis Fig. 5 gezeigte Zahnbürste 10 dargestellt. Dieser ist ebenfalls mit Ausnehmungen 30 und Stegen 40 gestaltet. Dabei sind die Stege 40 auf der Unterseite 28 des Kopfes 16 als Zungenreinigerrippen 56, die einerseits einer Zungenreinigung oder auch einer Massagefunktion dienen können, ausgeformt. Auf der mit Borsten 18 bestandenen Oberseite 26 des Kopfes 16 sind zudem weichelastische Massage- und / oder Reinigungselemente 58 angeordnet. Die Anordnung der Borsten 18 und der Massage- und / oder Reinigungselemente 58 erfolgt jeweils auf den Stegen 40 des Kopfes 16. Diese Ausführungsform zeigt eine der vielseitigen Anwendungsmöglichkeiten der vorliegenden Technologie mit gegeneinander versetzten Ausnehmungen 30. Die Technologie kann im kompletten Zahnbürstenkörper 14 angewendet werden. Das heisst, dass neben ihre Anwendung im Handgriff 12 auch im Hals 20, Kopf 16 und in einem später beschriebenen Zungenelement der Zahnbürste 10 entsprechende Ausnehmungen 30, Stege 40 und Hohlräume 42 ausgebildet werden können. Dies gilt selbstverständlich auch für die weiter oben beschriebenen Materialkombinationen, insbesondere einer Kombination aus Hart- und Weichmaterial.

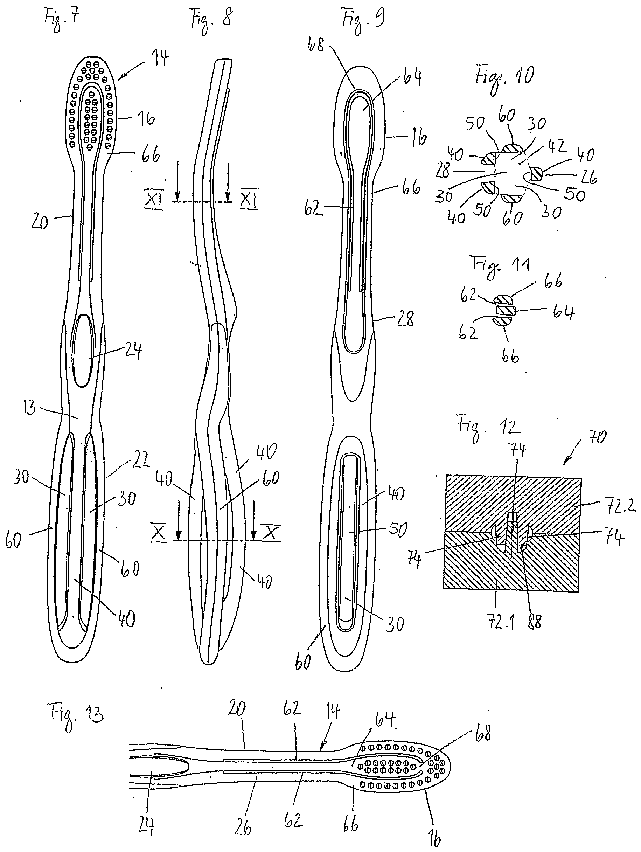

In Fig. 7 bis Fig. 9 ist ein Zahnbürstenkörper 14 einer weiteren besonders bevorzugten Ausführungsform einer Zahnbürste 10 gezeigt. Im Handgriff 12 sind bei dieser Ausführungsform längliche, sich entlang der Längsachse des Griffkörpers 13 erstreckende Ausnehmungen 30 ausgebildet. Ihre Ausnehmungsböden 50 formen auf der Unterseite 28, wie insbesondere in Fig. 8 und Fig. 9 sichtbar ist, zwei längliche Stege 40. Am Griffkörper 13 sind seitlich aussen Griffrippen 60 angeformt. Der Griffkörper 13, wie auch insbesondere die Griffrippen 60, können aus Weichmaterial oder Hartmaterial oder einer Kombination aus Weich- und Hartmaterial gebildet sein.

Auf der in Fig. 9 gezeigten Unterseite 28 des Handgriffs 12 ist eine ebenfalls längliche Ausnehmung 30 sichtbar. Der Ausnehmungsboden 50 dieser länglichen Ausnehmung 30 formt den auf der Oberseite 26 nach aussen gewölbten und in Fig. 7 und Fig. 8 sichtbaren, in Richtung der Längsachse des Griffkörpers 13 verlaufenden Steg 40.

In Fig. 10 ist ein Schnitt durch den Handgriff 12 entlang der in Fig. 8 gezeigten Schnittebene X - X dargestellt. Dabei sind besonders gut die beiden zur Oberseite 26 hin geöffneten Ausnehmungen 30 mit ihren beiden jeweils Stege 40 auf der Unterseite 28 formenden Ausnehmungsböden 50 sichtbar. Die Oberseite 26 wird im Wesentlichen durch den Ausnehmungsboden 50 bzw. den entsprechenden Steg 40 der zur Unterseite 28 hin geöffneten Ausnehmung 30 gebildet. Seitlich aussen sind zwei im Wesentlichen halbkreisförmige Schnittflächen der Griffrippen 60 sichtbar. Der im Innern des Handgriffs 12 ausgeformte und in Fig. 10 mit einergestrichelten Linie umgrenzte Hohlraum 42 hat auch bei dieser Ausführungsform einen nahezu rechteckförmigen Querschnitt. Selbstverständlich kann auch in diesem Fall die Anzahl der Stege 40 variieren. In Fig. 10 sind drei Stege 40 und zwei Griffrippen 60 sichtbar. Es können neben den 2 Griffrippen 60 aber auch 1, 5, 7 oder 9 abwechselnde Stege 40 geformt werden.

Bei der in Fig. 7 bis Fig. 9 gezeigten Ausführung einer Zahnbürste 10 wird durch eine sich vom Hals 20 bis zum Kopf 16 erstreckende, von der Oberseite 26 zur Unterseite 28 durchgängige Zungenausnehmung 62 ein elastisch federndes Zungenelement 64 ausgebildet. Die Zungenausnehmung 62 verläuft dabei zunächst nahezu gradlinig entlang der Längsachse des Halses 20, öffnet sich dann schlaufenförmig im Kopf 16 und läuft erneut wenigstens nahezu parallel entlang der Längsachse des Halses 20 zurück. In einem Schlaufenbereich des Kopfes 16 verläuft die Zungenausnehmung 62 nahezu parallel zur Aussenkontur des Kopfes 16. Dieser Bereich ist, wie ein das Zungenelement 64 umgebender Rahmenkörper 66, mit Borsten 18 besetzt.

Das Charakteristikum des vorliegenden Zungenelements 64 ist, dass Borsten 18 sowohl auf dem Zungenelement 64, wie auch auf dem Rahmenkörper 66 seitlich und unter Umständen in Längsrichtung hinter dem Zungenelement 64 - also im freien Endbereich des Kopfes 16 - angebracht sind. Das heisst, dass bei einer Seitenansicht in Querrichtung des Kopfes 16, sowohl auf dem Rahmenkörper 66, wie auch auf dem Zungenelement 64 Borsten 18 sichtbar angeordnet sind.

Das Zungenelement 64 steht, wie in Fig. 8 und Fig. 11 gezeigt, auf der Oberseite 26 über den Rahmenkörper 66 hervor. Der resultierende Abstand, der zwischen einer Borstenfläche auf dem Zungenelement 64 und einer Borstenfläche auf dem Rahmenkörper 66 vorhanden ist, liegt zwischen 0,3 mm und 3 mm, vorzugsweise zwischen 0,5mm und 1,5mm.

In der Schnittdarstellung von Fig. 11 ist der Rahmenkörper 66 durch zwei halbkreisförmige Schnittflächen dargestellt. Der Querschnitt der Zungenausnehmung 62 läuft konisch von der Unterseite 28 zur Oberseite 26 zu, um als Richtungsführung bei der Rückführung des Zungenelements 64 in seine von aussen unbelastete Ruheposition zu dienen. Das angeschnittene Zungenelement 64 weist einen trapezförmigen, nahezu rechteckförmigen Querschnitt auf. Fig. 8 und Fig. 11 zeigen deutlich, dass äquivalente Materialstärken, sowohl beim Rahmenkörper 66 wie auch beim Zungenelement 64 ausgebildet sind, was produktionstechnische Vorteile bringt.

Die Form des Zungenelements 64 ist so gestaltet, dass Krümmungsradien grösser als 3 mm verwendet werden, um das Verletzungsrisiko bei der Anwendung der Zahnbürste zu vermindern.

Die Breite der Zungenausnehmung 62 beträgt auf der Oberseite 26 der Zahnbürste 10 im Halsbereich zwischen 0,3 mm und 2 mm, vorzugsweise zwischen 0,5 mm und 1 mm, und vergrössert sich zum Scheitelpunkt der Zungenausnehmung 62 auf 1 mm bis 2 mm, vorzugsweise auf 1,1 mm bis 1,4 mm.

Die Flexibilität des Zungenelements 64 und des Rahmenkörpers 66 kann auf verschiedene Arten beeinflusst werden. Die Materialstärken, Breiten und geometrischen Formen der jeweiligen Körper, wie auch die Materialzusammensetzung aus Hart- und / oder Weichmaterial sind Parameter, die massgeblich die Flexibilität beeinflussen. Vorzugsweise besteht der Rahmenkörper 66 aus einer Kombination von Hart- und Weichmaterial. Das Zungenelement 64 ist vorzugsweise aus Hartmaterial hergestellt.

In Fig. 13 ist eine alternative Ausführung eines Halses 20 und Kopfes 16 für eine Zahnbürste 10 dargestellt. Dabei ist das Zungenelement 64 an einem Zungenscheitelpunkt 68 am Kopf 16 mit dem Rahmenkörper 66 fest verbunden, so dass es zu einer brückenartigen Ausbildung des Zungenelements 64 kommt. Die elastische Auslenkbarkeit des Zungenelements 64 an seinem Zungenscheitelpunkt 68 gegenüber dem Rahmenkörper 66 ist auf diese Weise reduziert. Diese Materialbrücke kann aus Weichmaterial, Hartmaterial oder einer Kombination von Hart- und Weichmaterial bestehen. Falls nur Hartmaterial eingesetzt wird, kann an dieser Stelle die Materialstärke massiv reduziert werden und es kann beispielsweise ein Filmscharnier ausgebildet werden, damit immer noch eine gewisse Flexibilität erlaubt wird. Es ist natürlich auch möglich, derartige Zungenelemente 64 mit einem freien Endbereich oder mit zwei festen Endbereichen bei Zahnbürsten 10 mit konventionellen Handgriffen auszubilden.

Der erfindungsgemässe Handgriff 12 sowie der Zahnbürstenkörper 14 einer Zahnbürste 10 werden zusammen in einem Spritzgiessverfahren aus Kunststoff hergestellt. Dieses Verfahren wird später im Zusammenhang mit Fig. 41 bis Fig. 44 detailliert beschrieben. In Fig. 12 ist bereits jetzt ein Schnitt durch ein Spritzgusswerkzeug 70 mit einer ersten Werkzeughälfte 72.1 und einer zweiten Werkzeughälfte 72.2 gezeigt. Die Schnittebene durch das Spritzgusswerkzeug 70 entspricht etwa der in Fig. 8 mit X - X bezeichneten Schnittebene durch den Zahnbürstenkörper 14. Dem gemäss stellt der in Fig. 12 gezeigte Schnitt durch das Spritzgusswerkzeug 70 die Negativform des in Fig. 10 gezeigten Querschnitts des Handgriffs 12 aus Fig. 8 dar.

Die beiden zur Oberseite 26 der Zahnbürste 10 geöffneten Ausnehmungen 30 werden durch zwei konisch zulaufende Fingerelemente 74 ausgeformt. Diese berührend und dabei einen Durchfluss von Kunststoff ausschliessend, greift ein weiteres Fingerelement 74 zwischen die beiden, zur zweiten Werkzeughälfte 72.2 gehörenden Fingerelemente 74 ein. Die sich berührenden Fingerelemente 74 formen im fertigen Handgriff 12 die Ausnehmungen 30 und den Hohlraum 42. Eine nicht schraffierte Kavität 88, die bei der Herstellung mit Kunststoff gefüllt wird, bestimmt die Form der Wand 32, einschliesslich der Stege 40 und der Griffrippen 60.

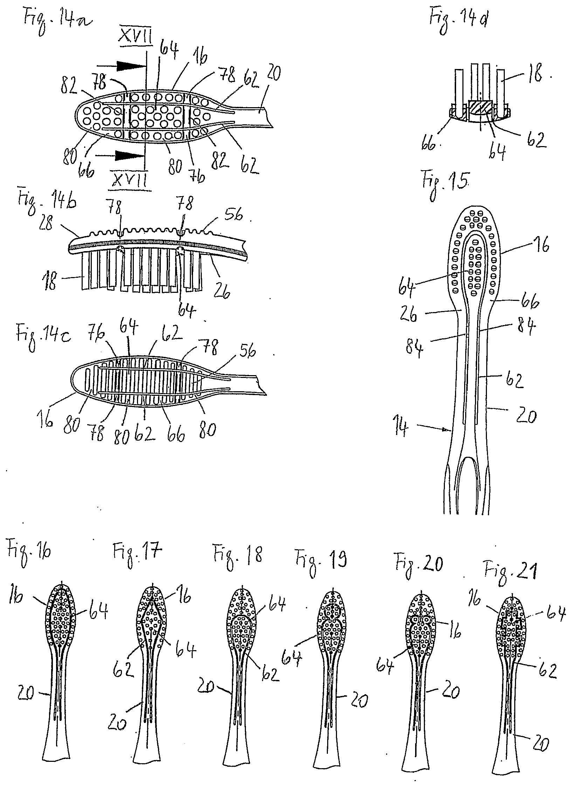

In den Figuren 14 bis 24 sind weitere Ausführungsformen von Zungenelementen 64 dargestellt. Bei der in Fig. 14a gezeigten Ausführung des Kopfes 16 erstrecken sich zwei Zungenausnehmungen 62 vom kopfseitigen Endbereich des Halses 20 bis zum freien Endbereich des Kopfes 16. Dabei verlaufen die Zungenausnehmungen 62 im Bereich des Kopfes 16 wenigstens nahezu parallel zueinander. Durch die Zungenausnehmungen 62 wird das Zungenelement 64 brückenartig ausgeformt, wobei die beiden sich gegenüberliegenden Endbereiche des Zungenelements 64 jeweils fest mit dem Rahmenkörper 66 verbunden sind.

Wie in Fig. 14c gezeigt, verlaufen rechtwinklig zu den Zungenausnehmungen 62 und deckungsgleich auf der Oberseite 26 und der Unterseite 28 des Kopfes 16 jeweils zwei Kopfrillen 76. Die zwischen den Kopfrillen 76 reduzierte Materialstärke bildet zwei filmartige Scharniere 78. Die filmartigen Scharniere 78 untergliedern den Kopf 16 in drei elastisch gegeneinander auslenkbare Kopfsegmente 80.

Eine Auslenkung der Kopfsegmente 80 gegeneinander wird durch den filmartigen Scharnieren 78 zugeordnete Begrenzungselemente 82 begrenzt.

Wie in Fig. 14b und der Schnittdarstellung in Fig. 14d gezeigt, ist das Zungenelement 64 gegenüber dem Rahmenkörper 66 in der Höhe versetzt angeordnet. Die auf der Oberseite 26 des Zungenelements 64 befestigten Borsten 18 stehen über die am Rahmenkörper 66 befestigten Borsten 18 hervor und können dadurch die Reinigung interdentaler Zwischenräume unterstützen.

Fig. 15 zeigt eine weitere Ausführungsform einer Zahnbürste 10 mit einem Hals 20 und einem Kopf 16, der ähnlich zu der in Fig. 9 gezeigten Ausführungsform ist. Im Unterschied zu dieser, ist das Zungenelement 64 hier im Bereich des Halses 20 seitlich am Rahmenkörper 66 mittels zweier Zungenstege 84 befestigt. Diese, nahezu mittig bezüglich der Längsachse des Zungenelements 64 angeordneten Zungenstege 84 bewirken bei einer Belastung des Zungenelements 64 einen Wippeffekt, wodurch die Reinigung und Massage der Mundhöhle zusätzlich unterstützt wird. Der Abstand der Zungenstege 84 vom Trennpunkt des Zungenelements 64 im Halsbereich der Zahnbürste 10 beträgt zwischen 35% und 65%, vorzugsweise 45% bis 60% der Länge des Zungenelements 64.

Eine weitere Ausführungsform einer solchen Zahnbürste 10 mit Wippeneffekt kann derart gestaltet sein, dass mehrere Zungenstege 84 ausgebildet sind und der Benutzer mittels einer Durchtrennung von Zungenstegen 84 die Flexibilität beziehungsweise den Wippeneffekt seines Zungenelements 64 selbst einstellen kann. Die Zungenstege 84 können dabei ausschliesslich aus Hartmaterial, ausschliesslich aus Weichmaterial oder einer Kombination aus Hart- und Weichmaterial hergestellt sein.

Fig. 16 bis Fig. 21 zeigen spezifische Gestaltungsmöglichkeiten von Zungenelementen 64. Der Schlaufenbereich der Zungenausnehmung 62 kann im Kopf 16 oval (Fig. 16), rhombusförmig (Fig. 17), ballonartig (Fig. 18) und /oder piktogrammartig mit abgerundeten, eckigen und / oder geradlinigen Segmenten (Fig. 19 bis 21) ausgeformt sein. Verschiedenartige Ausführungen von Zungenelementen 64, die gegebenenfalls auch eingefärbt sein können, verbessern die Wiedererkennung einer bestimmten Zahnbürste 10. Selbstverständlich kann auch bei dieser Ausführungsform - in Analogie zu Fig. 13 - der Zungenscheitelpunkt 68 mit dem Rahmenkörper 66 verbunden werden.

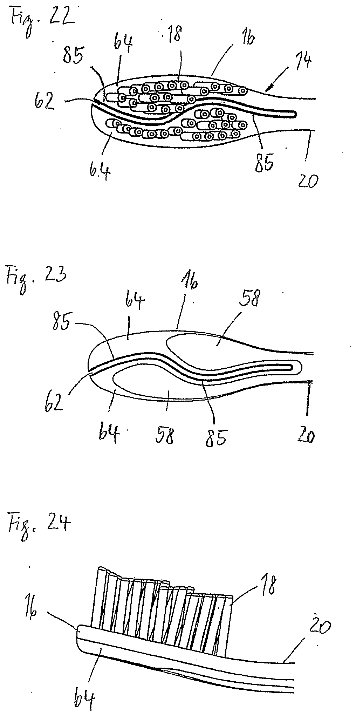

In Fig. 22 bis Fig. 24 ist eine weitere Ausführungsform eines mehrteiligen Kopfes 16 dargestellt. Der Kopf 16 ist dabei vom Hals 20 bis zum freien Ende des Kopfes 16 mit einer in den Draufsichten von Fig. 22 und Fig. 23 sichtbaren, spaltartigen, S-förmig geschwungenen Zungenausnehmung 62 versehen. Diese Zungenausnehmung 62 formt zwei zinkenartige Zungenelemente 64 aus, die jeweils mit Borsten 18 ausgestattet sind und unabhängig voneinander gegeneinander auslenkbar sind. Die Zungenausnehmung 62 hat entlang ihrer gesamten Länge eine nahezu konstante Breite von 0,7 mm bis 1 mm, vorzugsweise von 0,8 mm bis 0,9 mm.

Die beiden zinkenartigen Zungenelemente 64 sind zungenausnehmungsseitig unter einem Winkel kleiner als 20°, vorzugsweise kleiner als 8°, zu einer Spaltsenkrechten, die im Wesentlichen senkrecht zur Oberseite 26 und zur Unterseite 28 verläuft, angeschrägt bzw. abgerundet.

Die beiden Zungenelemente 64 können unterschiedlichen Materialdicken, wie in Fig. 24 sichtbar, und unterschiedliche Topografien auf der Oberseite 26 und / oder Unterseite 28 aufweisen. Um mögliche Verletzungen im Mundraum zu vermeiden, bilden Tangenten in einer Längsmittelebene, die sich im Wesentlichen parallel zur und zwischen der Oberseite 26 und der Unterseite 28 erstreckt, an Zungenausnehmungswänden 85 der Zungenausnehmungen 62 einen Winkel von maximal 45°, vorzugsweise von maximal 36°, mit der Längsachse des Kopfes 16.

Durch die S-förmige Ausgestaltung der Zungenausnehmung 62 ragen jeweils Abschnitte eines Zungenelements 64 über die Längsachse des Kopfes 16 hinweg in Richtung des gegenüberliegenden Zungenelements 64. Dabei wird die Längsachse um maximal 3 mm, vorzugsweise um maximal 2 mm überragt.

Die beiden Zungenelemente 64 weisen vorzugsweise unterschiedliche Flexibilitäten gegenüber dem Hals 20 bzw. dem Handgriff 12 auf und vermitteln dadurch verschiedene Anpressdrücke über die Borsten 18 auf die Gewebe bzw. Zähne der Mundhöhle bei der Benutzung der Zahnbürste 10. Diese unterschiedlichen Flexibilitäten können dadurch erreicht werden, dass die Zungenelemente 64 in ihrem Ansatzbereich am Hals 20 verschiedene Querschnitte besitzen und / oder eine unterschiedliche Anordnung und / oder verschiedene Anteilsverhältnisse bzw. Aufbaustrukturen von Hart- und / oder Weichmaterialien haben.

Weiterhin sind Ausführungsformen des in Fig. 22 bis Fig. 24 gezeigten Kopfes 16 möglich, bei denen die beiden Zungenelemente 64 V-förmig zueinander angeordnet sind. Dabei können ihre Längsachsen unter verschiedenen Winkeln bezüglich der Längsachse des Kopfes 16 vom Hals 20 abstehen und / oder die Zungenelemente 64 können im Querschnitt zueinander um die Längsachse des Kopfes 16 geneigt sein und dadurch vorzugsweise eine V-förmige, zur gemeinsamen Zungenausnehmung 62 zulaufende Oberseite 26 des Kopfes 16 formen. Die jeweiligen Winkel zwischen den Oberseiten 26 der Zungenelemente 64 und der Längsmittelebene des Kopfes 16, die sich im Wesentlichen parallel zwischen der Oberseite 26 und Unterseite 28 des Kopfes 16 erstreckt, betragen dabei vorzugsweise jeweils weniger als 10°. Derartig kleine Winkel sind bereits ausreichend, um die Flexibilität der Zungenelemente 64 und damit die Reinigungswirkung unterschiedlich zu gestalten.

Zusätzlich kann die Unterseite 28 des Zahnbürstenkörpers 14 am Kopf 16 wenigstens teilweise mit einem Weichmaterial bedeckt sein. Das Weichmaterial bildet dabei vorzugsweise Massage- und / oder Reinigungselemente 58, wie sie beispielsweise in Fig. 23 gezeigt sind. Vorzugsweise haben die flächigen Segmente mit weichelastischem Material, bzw. mit damit geformten Massage- und Reinigungselementen 58 unterschiedliche Grössen und Formen pro Zungenelement 64. Da die beiden Zungenelemente 64 flexibel gegeneinander auslenkbar sind und sich so den Oberflächen im Mund besser anpassen können, wird eine verbesserte Massage- und Reinigungswirkung erzielt.

Die borstentragende Oberseite 26 des Kopfes 16 wird vorzugsweise durch Hartmaterial des Zahnbürstenkörpers 14 gebildet. Auf der borstentragenden Oberseite 26 des Zahnbürstenkörpers 14 können weitere Kunststoffe als Hartmaterial und / oder Weichmaterial zur Ausformung von Massage- und / oder Reinigungselementen 58 angespritzt sein. Diese unterstützen und ergänzen die konventionellen Borsten 18 bei ihrer Reinigungsfunktion. Wiederum sind diese Reinigungselemente 58 auch auf der Oberseite 26 vorzugsweise pro Zungenelement 64 jeweils unterschiedlich bzw. asymmetrisch angeordnet.

Aufgrund der geschwungenen Form der Zungenausnehmung 62 und den zusätzlichen, vorzugsweise asymmetrisch gestalteten Anspritzungen ist es möglich, die Flexibilität der einzelnen Zungenelemente 64 unabhängig voneinander einzustellen.

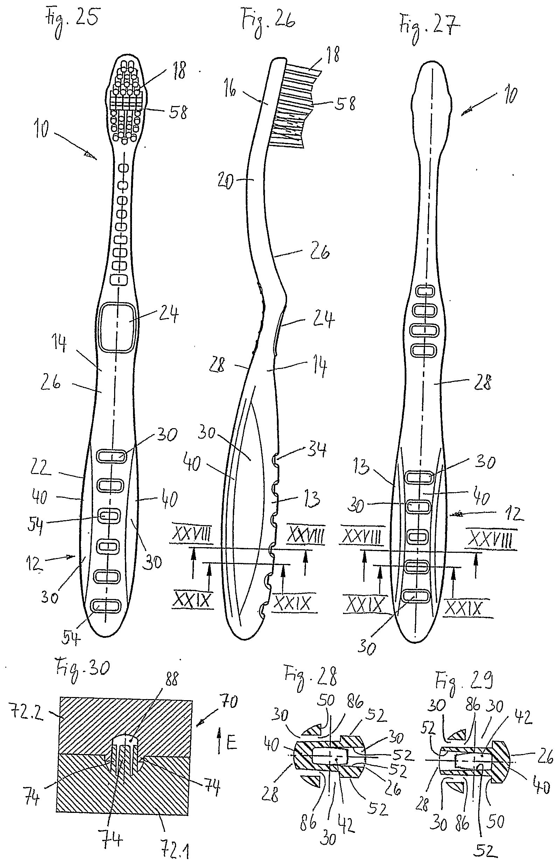

Bei der in Fig. 25 bis Fig. 27 gezeigten Ausführungsform einer Zahnbürste 10 ist der Handgriff 12 mit sechs in einer Reihe entlang der Längsachse des Handgriffs 12 angeordneten, im Wesentlichen rechteckförmigen, gesenkten Ausnehmungen 30 ausgestattet. Deren Ausnehmungsöffnungen 54 sind jeweils in Richtung der Endbereiche des Handgriffs 12 vergrössert.

Seitlich am Handgriff 12 sind darüber hinaus längliche, sich über nahezu den gesamten Handauflageabschnitt 22 erstreckende, seitliche Ausnehmungen 30 ausgebildet. Die Ausnehmungsböden 50 dieser seitlich angeordneten Ausnehmungen 30 bilden von der Oberseite 26 aus gesehen zwei jeweils spitz zulaufende kreissegmentartige Stege 40. Diese sind als leicht gewölbte und im Wesentlichen parallel zur Unterseite 28 verlaufende Linien in der Seitenansicht von Fig. 26 gut sichtbar.

Zusätzlich sind am Handgriff 12 weitere Ausnehmungen 30 ausgeformt, die zur Unterseite 28 geöffnet und entlang der Längsachse des Handgriffs 12 versetzt zu den ihnen auf der Oberseite 26 gegenüberliegenden Ausnehmungen 30 angeordnet sind. Die gegeneinander versetzten Ausnehmungen 30 bilden und münden wiederum in den Hohlraum 42.

Der durch die Stege 40 und Ausnehmungswände 52 umgebene Hohlraum 42 ist in den Schnittdarstellungen von Fig. 28 und Fig. 29 dargestellt. Die Figuren zeigen Querschnitte des Handgriffs entlang der in Fig. 26 und Fig. 27 eingezeichneten Schnittebenen XXVIII - XXVIII und XXIX - XXIX. Die Schnittebene XXVIII - XXVIII verläuft rechtwinklig zur Längsachse des Handgriffs 12 und schneidet eine zur Oberseite 26 hin geöffnete Ausnehmung 30. Die Ausnehmung 30 ist sacklochartig ausgebildet und durch Ausnehmungswände 52 und den Ausnehmungsboden 50, der den Steg 40 formt, begrenzt. Die länglichen, seitlich am Griffkörper 13 angeordneten und ebenfalls zur Oberseite 26 geöffneten Ausnehmungen 30 sind seitlich aussen nicht durch Ausnehmungswände 52 begrenzt. Mit den beiden zur Unterseite 28 hin geöffneten Ausnehmungen 30 bilden sie abgewinkelte Durchgänge 86. Die Ausnehmungsböden 50 der seitlich angeordneten, zur Oberseite 26 geöffneten Ausnehmungen 30 bilden Stege 40 mit einer kreissegmentförmigen Querschnittsfläche. Sie können aus Weichmaterial, Hartmaterial oder einer Kombination davon hergestellt sein. Die Längsachse des zentral im Griffkörper 13 ausgebildeten Hohlraums 42 fällt mit der Längsachse des Griffkörpers 13 zusammen. Der Hohlraum 42 weist, wie in Fig. 28 und 29 gezeigt, einen im Wesentlichen rechteckigen Querschnitt auf.

Die Schnittebene XXIX - XXIX verläuft, wie in Fig. 26 und Fig. 27 gezeigt, auf der Oberseite 26 durch einen Steg 40 und auf der Unterseite 28 durch eine Ausnehmungsöffnung 54 hindurch.

In Fig. 30 ist das zweiteilige Spritzgusswerkzeug 70 zur Herstellung der Zahnbürste 10 aus Fig. 25 bis Fig. 29 in einer Schnittdarstellung gezeigt. Die dabei gewählte Schnittebene entspricht der in Fig. 26 und Fig. 27 mit XXIX - XXIX bezeichneten Schnittebene. Entsprechend stellt das in Fig. 30 gezeigte Schnittbild des Spritzwerkzeugs 70 eine Negativform des in Fig. 29 gezeigten Querschnitts durch den Handgriff 12 dar. Dabei begrenzen auch Fingerelemente 74, die von der ersten Werkzeughälfte 72.1 in die zweite Werkzeughälfte 72.2 und zwei angeschnittene Fingerelemente 74 die von der zweiten Werkzeughälfte 72.2 in die erste Werkzeughälfte 72.1 hineinreichen, die Kavität 88 (Formhohlraum). Die Fingerelemente 74 formen im fertiggestellten Handgriff 12 die Ausnehmungen 30. Durch die Berührung der Fingerelemente 74 der ersten Werkzeughälfte 72.1 und der zweiten Werkzeughälfte 72.2 werden die abgewinkelten Durchgänge 86 sowie der Hohlraum 42 gebildet.

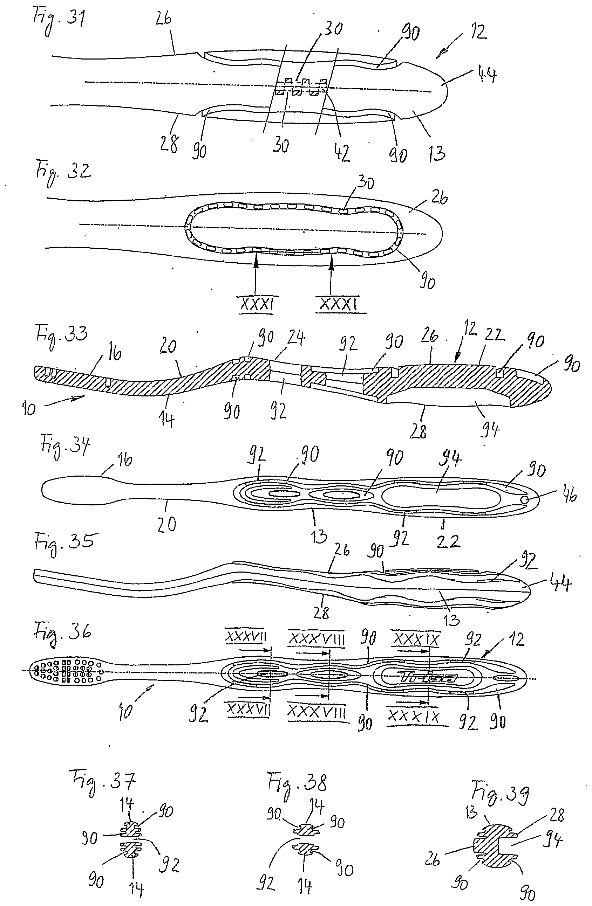

In Fig. 31 und 32 ist eine weitere Ausführungsform eines erfindungsgemässen Handgriffs 12 dargestellt. Dabei verlaufen jeweils auf der Oberseite 26 und der Unterseite 28 umlaufende Nuten 90 bzw. Rillen. Die Nuten 90 der Oberseite 26 und der Unterseite 28 liegen sich deckungsgleich gegenüber. In den Nuten 90 sind, wie insbesondere in Fig. 32 sichtbar, gegeneinander versetzte Ausnehmungen 30 angeordnet. Die Ausnehmungen 30 der zur Oberseite 26 hin geöffneten Nuten 90 und die Ausnehmungen 30 der zur Unterseite 28 hin geöffneten Nuten 90 sind, wie im in Fig. 31 angeschnittenen Bereich, gegeneinander versetzt angeordnet. Die Schnittebene für den in Fig. 31 angeschnitten gezeigten Bereich ist in Fig. 32 mit XXXI - XXXI bezeichnet. Durch die versetzt gegeneinander ausgebildeten Ausnehmungen 30 werden in den Nuten 90 gegeneinander versetzt angeordnete Stege 40 ausgebildet, die wiederum den in Fig. 31 gestrichelt eingezeichneten Hohlraum 42 umgeben. Wie in Fig. 32 gezeigt, können die Nuten 90 oval geöffnet oder auch linienartig ausgeformt sein.

In Fig. 33 bis Fig. 39 ist eine weitere Ausführungsform einer Zahnbürste 10 dargestellt. Bei dieser Ausführungsform sind sowohl umlaufende Nuten 90, wie auch oval gestreckte Nuten 90 auf der Oberseite 26 und der Unterseite 28 ausgebildet. Diese Ausführungsform kann sowohl mit einem hohlen Handgriff 12 als auch mit einem konventionell ausgefüllten Handgriff ausgestattet sein. Zusätzlich sind am Handgriff 12, insbesondere im Bereich der Daumenauflage 24, Durchgangslöcher 92, die von der Oberseite 26 zur Unterseite 28 durchgehen, ausgeformt. Diese Durchgangslöcher 92 können ebenfalls in Nuten 90 angeordnet sein. Wie in Fig. 33 dargestellt, ist der Handgriff 12 im Handauflageabschnitt 22 mit einer zur Unterseite 28 geöffneten Sacklochausnehmung 94 versehen.

Fig. 37 bis Fig. 39 zeigen Querschnitte der in Fig. 33 bis Fig. 36 gezeigten Zahnbürste, wobei die betreffenden Schnittebenen in Fig. 36 mit XXXVII - XXXVII bis XXXIX - XXXIX bezeichnet sind. Deutlich sind die zentral durch den Griffkörper 13 hindurchgehenden Durchgangslöcher 92 zu sehen. Im Querschnitt von Fig. 39 ist die zur Unterseite 28 hin geöffnete Sacklochausnehmung 94 angeschnitten. In allen drei Schnittdarstellungen von Fig. 37 bis Fig. 39 sind ebenfalls die sich auf der Oberseite 26 und Unterseite 28 deckungsgleich gegenüberliegenden Nuten 90 sichtbar.

Fig. 40 zeigt eine weitere Ausführungsform einer Zahnbürste 10. Der Aufbau dieser Ausführungsform ist im Wesentlichen analog zur in Fig. 1 bis Fig. 5 gezeigten Zahnbürste 10. Allerdings sind die jeweils zur Oberseite 26 bzw. Unterseite 28 geöffneten Ausnehmungen 30 nicht gleichartig ausgerichtet. Die mit rechteckigen Ausnehmungsöffnungen 54 versehenen Ausnehmungen 30 sind jeweils um ihre Längsachsen, die rechtwinklig zur Längsachse des Griffkörpers 13 ausgerichtet sind, gegeneinander verdreht angeordnet. Dies erhöht einerseits die Wiedererkennbarkeit einer spezifischen Zahnbürste 10 und führt andererseits zu einer charakteristischen Ausgestaltung des durch die Ausnehmungen 30 gebildeten Hohlraums 42.

In den Figuren 41 bis 44 ist ein zur Herstellung eines erfindungsgemässen Handgriffs 12 bzw. einer Zahnbürste 10 verwendetes Spritzgusswerkzeug 70 dargestellt. Wie bereits erwähnt, weist das Spritzgusswerkzeug 70 eine erste Werkzeughälfte 72.1, die in einer Draufsicht in Fig. 42 dargestellt ist, und eine zweite Werkzeughälfte 72.2, die in einer Draufsicht in Fig. 41 dargestellt ist, auf. Die beiden Werkzeughälften 72.1 und 72.2 werden zur Herstellung der in Fig. 1 bis Fig. 5 gezeigten Zahnbürste 10 mit den in Fig. 41 bzw. Fig. 42 gezeigten Frontflächen aufeinander gelegt, um in einem Spritzgiessverfahren Kunststoffkomponenten in die nach dem Zusammenlegen der beiden Werkzeughälften 72.1, 72.1 gebildete einstückig zusammenhängende Kavität 88 einzuspritzen. Das Einspritzen des Kunststoffs erfolgt über einen in Fig. 43 eingezeichneten Injektionstrichter 96, der zur Kavität 88 hin geöffnet ist, und an der fertiggestellten Zahnbürste 10 zur Ausbildung des Anspritzpunktes 46 führt. Als Kunststoff zum Spritzen des Zahnbürstenkörpers 14 einschliesslich des Griffkörpers 13 werden Hartmaterialien, wie z.B. Polypropylen (PP), Polyester (PET), Polycyclohexandimethanoltherasthalat (PCT / PCT-A (säuremodifiziert) / PCT-G (glykolmodifiziert)), Polyethylen (PE), Polystyrol (PS), Styrolacrylnitril (SAN) Polymethylmetacrylat (PMMA), Acrylbutadienstyrol (ABS) usw. vorzugsweise Polypropylen (PP) verwendet. Im Fall des Einsatzes von Polypropylen (PP) weist der Kunststoff ein Elastizitätsmodul von 1000 N/mm² bis 2400 N/mm², vorzugsweise von 1300 N/mm² bis 1800 N/mm² auf.

Wie in der Schnittdarstellung von Fig. 43 sichtbar, greifen die Fingerelemente 74, die jeweils zur ersten bzw. zweiten Werkzeughälfte 72.1, 72.2 gehören, derart ineinander, dass ein Durchfluss von Kunststoff an ihren Berührungsflächen 100 ausgeschlossen ist. Durch den Ausschluss von Kunststoff zwischen den Berührungsflächen 100 sind die Ausnehmungen 30 im ausgehärteten Kunststoffkörper unter Bildung des Hohlraums 42 miteinander verbunden.

Wie im in Fig. 44 gezeigten Querschnitt entlang der in Fig. 43 mit XLIV - XLIV bezeichneten Schnittebene, laufen die einzelnen Fingerelemente 74 jeweils konisch unter einem Winkel zwischen 5° bis 15°, vorzugsweise von 10°, zu und sind entlang einer Entformungsrichtung E zum Trennen der Werkzeughälften 72.1, 72.2 ausgerichtet. Die im Schnittbild ringsegmentförmige Kavität 88 bildet am fertiggestellten Griffkörper 13 die den Hohlraum 42 umgebende Wand 32. Dabei formt ein Fingerkopf 102 der Fingerelemente 74 den späteren Ausnehmungsboden 50, der die gegenüberliegenden benachbarten Ausnehmungen 30 in Form eines Steges 40 beabstandet. Der korrespondierende Querschnitt des fertiggestellten Zahnbürstenkörpers 14 ist in Fig. 5 gezeigt.

Alternativ zu dem in Fig. 41 bis Fig. 44 gezeigten Spritzgusswerkzeug mit feststehenden, entlang der Entformungsrichtung E ausgerichteten Fingerelementen 74 ist es auch möglich, die Fingerelemente 74 als herausziehbare Schieber oder Kerne auszubilden. Dadurch können die Fingerelemente 74 unter nahezu beliebigen Winkeln bezüglich der Längsachse der Kavität 88 ausgerichtet und Ausnehmungen 30 an einer beliebigen Position im Griffkörper 13 ausgeformt werden. Folglich können dadurch die Ausnehmungen 30 im ausgehärteten Kunststoffkörper sowohl in Umfangsrichtung, wie auch in Längsrichtung des Griffkörpers 13 beliebig gegeneinander versetzt ausgeformt werden.

Die Materialstärke der Wand 32 wird durch die Ausdehnung der Kavität 88 und die Grösse der Fingerelemente 74 bestimmt. Sie kann für verschiedene Benutzergruppen der jeweiligen Belastung entsprechend angepasst werden. Neben der Grösse der Fingerelemente 74 kann auch ihre Form stark variieren und den gegebenen Bedürfnissen angepasst werden. Ihre Ausdehnung ist allerdings so zu wählen, dass die Stabilität des gesamten Griffkörpers 13 nicht übermässig stark verringert wird.

Durch die Ausnehmungen 30 und den durch sie gebildeten Hohlraum 42 wird eine Volumen- und Gewichtseinsparung im Vergleich zu einem vollständig mit Kunststoff gefüllten Handgriff zwischen 35% bis 55% erreicht. Für das Volumenverhältnis zwischen einem vollständig gefüllten und einem hohlen Zahnbürstenkörper 14 ergeben sich Werte zwischen 1,35 : 1 und 2,2 : 1.

Die Fingerelemente 74 können derart gestaltet sein, dass sie nicht nur entlang des Handgriffs 12 von Ausnehmung 30 zu Ausnehmung 30 variieren, sondern dass auch der Querschnitt eines jeden Fingerelements 74 entlang seiner Längsrichtung variiert. Dabei können Querschnittsformen, die oval, kreisförmig, halbmondförmig, sichelförmig, quadratisch, n-eckförmig oder mit den Umrissen von Tieren oder Figuren ausgestattet sind, verwendet werden.

Aufgrund unterschiedlich gestalteter Fingerelemente 74 und deren verschiedenartiger Anordnung werden auch unterschiedlichen Ausführungen von Berührungsflächen 100 zwischen benachbarten Fingerelementen 74 und verschiedenartige Ausnehmungswände 52 erzeugt. Folglich können ebenfalls die Hohlräume 42 mit verschiedenen Querschnitten, die beispielsweise quadratisch, kreisförmig, halbmondförmig, sichelförmig, oval, rechteckförmig und n-eckig sowie mit den Umrissen von Figuren und Tieren versehen sind, ausgebildet werden.

Aufgrund des verringerten Materialvolumenanteils bei einem erfindungsgemässen Handgriff 12 bzw. einer Zahnbürste 10 können einerseits die Materialkosten gesenkt und die Zykluszeit, das heisst, die Standzeit auf der Spritzgiessmaschine bei der Herstellung eines derartigen Körpers, verringert werden, da der gespritzte Kunststoffkörper schneller erkaltet. Diese Vorteile führen zu einer Optimierung der Herstellungskosten des Handgriffs 12 bzw. der Zahnbürste 10 unter Beibehaltung einer voluminösen und ergonomisch vorteilhaften äusseren Form. Zudem kann aufgrund der verringerten Wandstärken die Gefahr von Einschlüssen oder Einfallstellen reduziert oder gar vermieden werden. Darüber hinaus wird der Effekt des Wärmeschwundes des Kunststoffkörpers vermindert und Oberflächen von hoher Güte bei gleichmässigerer Produktqualität können, vor allem unter Produkten aus unterschiedlichen Kavitäten 88 des Spritzgusswerkzeugs, bereitgestellt werden.

Durch die seitliche Anordnung des Prägefeldes 38 bedingt, ist vor dem Entformen des Kunststoffkörpers aus dem Spritzgusswerkzeug 70 in die Entformungsrichtung E ein weiterer Schritt nötig. Das Prägefeld 38 wird durch einen Seitenschieber geformt, welcher vor genannter Entformung gezogen werden muss. Im Spritzgusswerkzeug in Fig. 41 und 42 ist dieser Seitenschieber nicht dargestellt. Im Vergleich mit der Anordnung des Prägefeldes 38 auf der Zahnbürste in Fig. 2, kann jedoch gefolgert werden, dass dieser im Bereich des zu formenden Handgriffs 12 angeordnet ist.

Nach einem Erstarren des Griffkörpers 13 bzw. des Zahnbürstenkörpers 14 werden, falls eingesetzt, zunächst bewegliche Schieber herausgezogen und anschliessend die Werkzeughälften 72.1, 72.2 voneinander getrennt. Um den Kunststoffkörper optimal zu entformen, sind in den Werkzeughälften 72.1, 72.2 nicht gezeigte Vorstosser und Ausstosser angeordnet, welche die Kunststoffteile während und nach dem Öffnen des Spritzgusswerkzeugs 70 in die Entformungsrichtung E herausdrücken.

Die Vorstosser, wie auch die Ausstosser, drücken aussen am gegen aussen gerichteten Umfang auf die Stege 40 der jeweiligen Zahnbürstenseite. Die Vorstosser bewirken, dass der Zahnbürstenkörper beim Öffnen des Spritzgusswerkzeugs 70, das heisst beim Trennen der Werkzeughälften 72.1, 72.2, in einer vorbestimmten Werkzeughälfte 72.1, 72.2 haften bleibt. Zu dem Zweck werden sie während dem Öffnen des Spritzgusswerkzeugs 70 mittels den Vorstossern aus der einen Hälfte der Kavität 88 entformt. Die Ausstosser bewirken schlussendlich die Entformung aus der anderen Werkzeughälfte 72.1, 72.2.

In jeder Werkzeughälfte 72.1, 72.2 befinden sich zu diesem Zweck zwei bis fünfzehn, vorzugsweise zwei bis acht Vorstosser beziehungsweise Ausstosser, welche einerseits auf die Stege 40 gerichtet sind, andererseits aber auch in der Hals- und Kopfregion der zu spritzenden Zahnbürste 10 angeordnet sind und bei der Entformung Druck auf die jeweiligen Stellen ausüben, so dass die Entformung vollzogen werden kann.

Die Vor- und Ausstosser bewegen sich entlang der Entformungsrichtung E des Spritzgusswerkzeugs 70. Die Vorstosser und die Ausstosser bewegen sich parallel zur Entformungsrichtung E jedoch in entgegengesetzte Richtungen. Die Vorstosser bewegen sich in Entformungsrichtung E, die Ausstosser dieser Richtung entgegen.

Die ausgestossenen Kunststoffkörper werden dann vorzugsweise von einem Roboter aus der Kavität 88 entnommen und entweder in eine weitere Kavität, vorzugsweise des gleichen Spritzgusswerkzeugs 70 zum Anspritzen weiterer Hartmaterialien und / oder Weichmaterialien umgelegt, oder zur weiteren Bearbeitung ausserhalb des Spritzgusswerkzeugs 70 aus der Form entfernt

Beim Anspritzen weiterer Kunststoffkomponenten ist zu beachten, dass die hohle bzw. skelettartige Struktur des Kunststoffkörpers in einer weiteren Kavität gegen den Einspritzdruck beim Anspritzen von weiteren Kunststoffmaterialien abgestützt werden muss. Dazu eignen sich insbesondere die bereits bei der Herstellung des Griffkörpers 13 bzw. des Zahnbürstenkörpers 14 zum Einsatz gekommen Fingerelemente 74. Sie werden wiederum in den Hohlraum 42 eingefahren, um diesen vor den Eindringen der weiteren Kunststoffmaterialien zu schützen und gleichzeitig die Kontur zu stützen.

Als Weichmaterialien zur Ausbildung von Weichelementen am Handgriff 12, beispielsweise der Stege 40, am Hals 20 oder am Kopf 16 werden beispielsweise Polyethylen (PE-LD, PE-HD), Polyurethan (PUR) und vorzugsweise ein thermoplastisches Elastomer (TPE) verwendet. Die Shore-A-Härte des verwendeten Weichmaterials liegt vorzugsweise unter 90. Insbesondere im Handauflageabschnitt 22 angeordnete Weichelemente in Form von Rippen und / oder Noppen aus einem Weichmaterial erhöhen den Benutzungskomfort der Zahnbürste 10 wesentlich, da durch die erzeugte Oberflächentopographie Flüssigkeit abgeführt und ein Abrutschen der Hand vom Handgriff 12 vermieden wird. Vorteilhafterweise können Anspritzpunkte für das Weichmaterial auch in den Ausnehmungen 30 bzw. im Hohlraum 42 gewählt werden. Vorzugsweise wird dieser aber auf der äusseren Oberfläche im hinteren Drittel des Griffkörpers 13 gewählt, z.B. auf einem Steg 40.

Zum Anbringen von konventionellen Borsten 18 am Kopf 16 werden vorzugsweise Stanzverfahren eingesetzt. Die Borsten 18 werden konventionell aus Polyamid (PA) oder Polyester (PBT) hergestellt und können zusammen mit weichelastischen Massage- oder Reinigungselementen 58 in einem Borstenfeld, dessen Länge zwischen 15 mm und 35 mm, vorzugsweise zwischen 24 mm und 30 mm, beträgt, angeordnet werden. Das Borstenfeld wird vorzugsweise mindestens teilweise mit konventionellen Borsten 18 bestückt. Die weichelastischen Massage- und Reinigungselemente 58 werden bevorzugt auf einem elastisch auslenkbaren Zungenelement(e) 64 der beschriebenen Bürstenköpfe 16 angebracht.

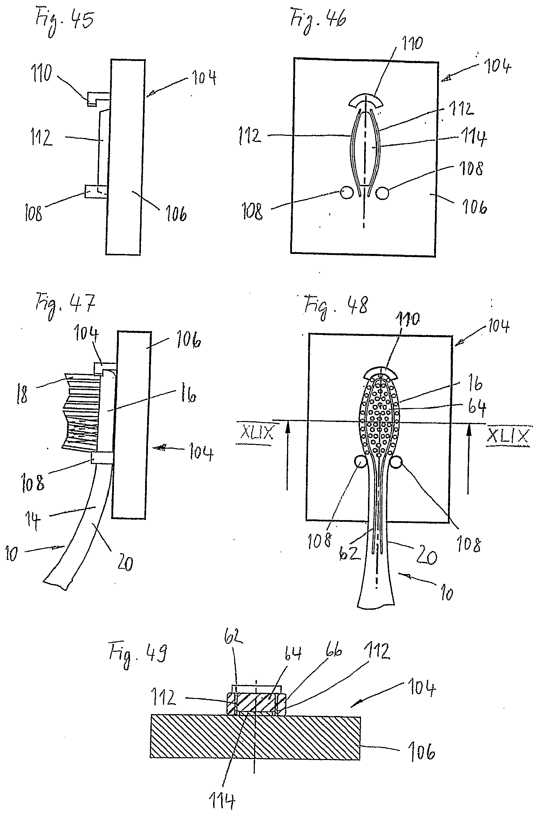

Beim Beborstungsprozess müssen der Kopf 16 und insbesondere die elastisch auslenkbaren Zungenelemente 64 in einer Kopfhalterung 104, wie sie in Fig. 45 bis 51 gezeigt ist, mechanisch fixiert werden.

In Fig. 45 und Fig. 46 ist die Kopfhalterung 104 zunächst ohne einen eingespannten Kopf 16 gezeigt. Die Kopfhalterung 104 weist eine Grundplatte 106 auf, die einseitig mit zwei seitlich bewegbaren Fixierstiften 108 und einem abgewinkelten Klemmbügel 110 ausgestattet ist. Zwischen den Fixierstiften 108 und dem Klemmbügel 110 sind zwei Klemmleisten 112 angeordnet, die in ihrer Form und Materialstärke den Zungenausnehmungen 62 angepasst sind. Zwischen den Klemmleisten 112 befindet sich zudem ein Klemmpodest 114, das über die Grundplatte 106 hervorsteht, damit das in der Zahnbürste 10 über den Rahmenkörper 66 vorstehende Zungenelement 64 gestützt und positioniert wird.

Beim in die Kopfhalterung 104 eingesetzten Kopf 16 greift, wie in Fig. 47 und Fig. 48 gezeigt, der Klemmbügel 110 auf der Oberseite 26 über den freien Endbereich des Kopfes 16, während die beiden Fixierstifte 108 durch ihren minimalen Abstand untereinander lediglich den verjüngten Hals 20, nicht aber den verbreiterten Kopf 16 zwischen sich aufnehmen können. Der Abstand zwischen den Fixierstiften 108 und dem Klemmbügel 110 ist der Länge des Kopfes 16 angepasst. Zudem ist der Klemmbügel 110 um den freien Endbereich des Kopfes 16 herumgeführt, um ein Auslenken des Kopfes 16 um einen der Fixierstifte 108 zu verhindern. Im eingeklemmten Zustand des Kopfes 16 greifen die Klemmleisten 112 von der Unterseite 28 in die Zungenausnehmung 62 ein und das Klemmpodest 114 unterstützt das Zungenelement 64. Durch die Verengung der Zungenausnehmung 62, hervorgerufen durch den Eingriff der Klemmleisten 112 in die Zungenausnehmung 62, kann der gesamte Kopf 16 inklusive dem Zungenelement 64 mittels der seitlich beweglichen Fixierstifte 108 geklemmt werden. Dieser Zustand eines in der Kopfhalterung 104 eingeklemmten Kopfes 16 ist in der Schnittdarstellung von Fig. 49 gezeigt. Die dabei gewählte Schnittebene ist mit XLIX - XLIX in Fig. 48 angegeben und verläuft quer durch den Kopf 16. Zusätzlich können nicht dargestellte seitliche Klemmelemente eingesetzt werden, welche ebenfalls auf den Rahmenkörper 66 drücken.

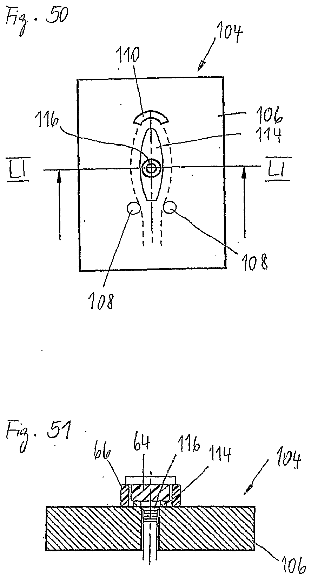

Alternativ bzw. zusätzlich kann das Zungenelement 64 während der Beborstung mittels einer Ansaugung an das Klemmpodest 114 fixiert werden. Eine dafür geeignete Kopfhalterung 104 ist in Fig. 50 und Fig. 51 dargestellt. Etwa mittig im Klemmpodest 114 mündet bei dieser Vorrichtung ein offener Ansaugstutzen 116. Wie in Fig. 51 gezeigt, liegt beim Einspannen des Kopfes 16 das Zungenelement 64 auf dem Klemmpodest 114 auf und verschliesst dabei den Ansaugstutzen 116. Um ein Abheben des Zungenelements 64 zu verhindern wird im Ansaugstutzen 116 ein Unterdruck erzeugt. Der Kopf 16 wird in dieser Anordnung gemeinsam durch den Klemmbügel 110, die Ansaugung 116 und die beweglichen Fixierstifte 108 für die Beborstung fixiert. Selbstverständlich kann ein analoger Vorrichtungsaufbau und ein analoges Verfahren zum Halten und Klemmen des Kopfes 16 für alle beschriebenen Bürstenköpfe eingesetzt werden.

Nach dem Spritzgiessen des Griffkörpers 13 bzw. des Zahnbürstenkörpers 14 aus einem Hartmaterial, gegebenenfalls einem Umlegen des Kunststoffkörpers in eine weitere Kavität zum Anspritzen einer oder mehrerer Hart- und / oder Weichmaterialien und einer anschliessenden Beborstung des Kopfes 16 erfolgt eine Prägung bzw. Beschriftung des Handgriffs 12 im dafür vorgesehenen Prägefeld 38 (siehe auch Fig. 2). Für die Prägung des vorzugsweise einseitig seitlich am Handgriff 12 angeordneten Prägefelds 38 muss der Griffkörper 13 erneut abgestützt werden, um dem Druck eines Prägewerkzeuges standhalten zu können und dabei eine Deformation oder gar Zerstörung des Handgriffs 12 zu verhindern.

Das Prägefeld 38 ist als eine in die Wand 32 versenkte Fläche gestaltet, von der sich beispielsweise ein Schriftrelief abhebt und über diese versenkte Fläche, jedoch nicht über die Aussenkontur des Handgriffs 12, hervorsteht. Das Prägefeld 38 und allenfalls das Schriftrelief werden bereits beim Spritzgiessen mittels Seitenschiebern hergestellt. Dabei ist die Tiefe des Prägefeldes 38 variabel und kann somit den abgerundeten Aussenkonturen angepasst werden. Das Prägefeld 38 ist vorzugsweise rechteckförmig ausgebildet und weist eine Grösse von 35 mm x 9 mm, vorzugsweise von 27 mm x 6,25 mm auf. Dabei ist die längere Seite des Prägefeldes 38 vorzugsweise entlang der Längsrichtung des Handgriffs 12 ausgerichtet. Alternativ zum Prägen kann auch ein Schriftzug aus zwei verschiedenen Materialkomponenten, insbesondere aus einer Kombination von Hart- und Weichmaterial gebildet werden. Dies erfordert wiederum einen entsprechend ausgeformte Seitenschieber, welche über die umlaufende Formtrennlinie des Handgriffes 12 bereichsweise überdeckt bzw. auftrennt.

Das vorliegende Verfahren zur Herstellung eines Handgriffs 12 für eine Zahnbürste 10 kann ebenfalls dazu genutzt werden, um generell Handgriffe 12 für Bürstenprodukte oder Körperpflegeprodukte mit einem Handgriff 12 und einem Behandlungskopf, wie beispielsweise Nassrasierer, Haarbürsten, Maskarabürsten usw., herzustellen. Selbstverständlich können die besprochenen Ausführungsformen des Handgriffs 12 auch für diese Körperpflegeprodukte eingesetzt werden, um den Materialeinsatz und die Zykluszeiten zu optimieren. Die Anwendung der aufgeführten Ausführungsformen für Köpfe 16, beispielsweise mit Zungenelementen 64 oder brückenartigen Zungenelementen 64, erfolgt vorzugsweise in manuellen Zahnbürsten 10. Ein Einsatz solcher Köpfe 16 in Elektrozahnbürsten, mit rotierenden Köpfen, Elektrozahnbürsten mit rotierenden und fixen Bürstenkopfsegmenten, Elektrozahnbürsten mit schwenkenden Bürstenköpfen, Vibrations- und Schallzahnbürsten oder einer Kombination dieser Elektrozahnbürstentypen ist jedoch gleichwohl möglich.

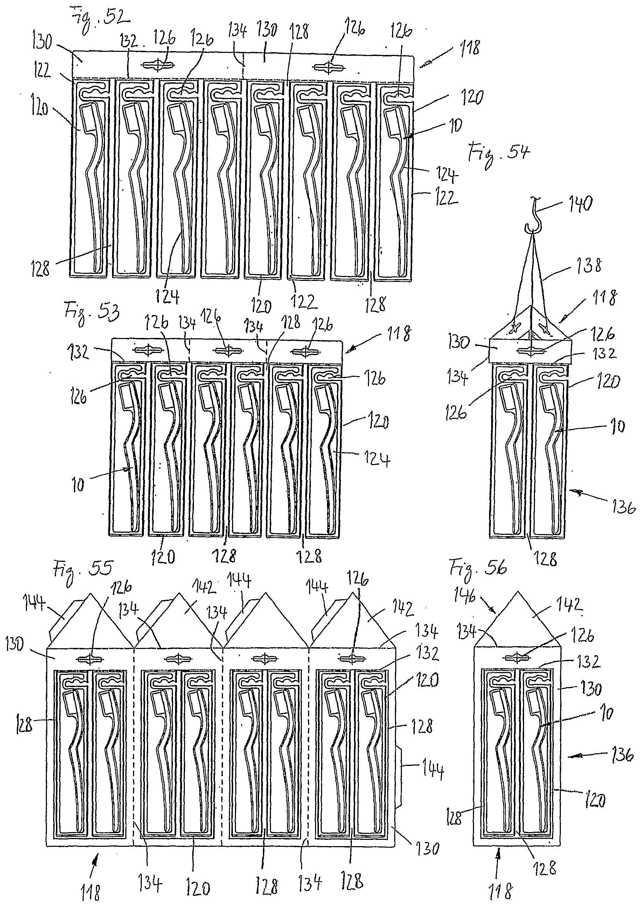

Sowohl eine Zahnbürste 10 als auch andere Körperpflegegeräte können mittels der im Folgenden beschriebenen und in Fig. 52 bis Fig. 56 gezeigten Gruppenverpackung 118 verpackt und präsentiert werden. Die in Fig. 52 gezeigte Gruppenverpackung 118 weist acht Einzelverpackungen 120 mit jeweils einer Zahnbürste 10 auf. Die Gruppenverpackung 118 kann auch für 4, 6, 10 oder 12 Einzelverpackungen 120 verwendet werden. Jede Einzelverpackung 120 ist mit einem Blisterträger 122 und einer Blisterhaube 124 ausgestattet.

Der Blisterträger 122 ist vorzugsweise aus Papier, Karton, Kunststoffmaterial oder einer Metallfolie hergestellt. Im Fall eines verwendeten Kunststoffmaterials ist dies vorzugsweise das gleiche Material, das für die Blisterhaube 124 verwendet wird. Entsprechend kann der Blisterträger 122 und die Blisterhaube 124 aus Polyethylen (PE), Polypropylen (PP), Polyvinylchlorid (PVC), Polysterol (PS), Polyethylenterephtalat (PET) und vorzugsweise aus Polyvinylchlorid (PVC) oder Polyethylenterephtalat (PET) gefertigt sein. Das Kunststoffmaterial ist dabei vorzugsweise wenigstens durchscheinend oder transparent. Der Blisterträger 124 kann weiterhin aus zwei Kunststoffschichten, zwischen welchen beispielsweise ein Karton eingelegt oder eingeschweisst ist, bestehen. Bei Verwendung einer Metallfolie als Blisterträger 122 wird als Material vorzugsweise Aluminium verwendet.

Jede Einzelverpackung 120, die vorzugsweise ein Körperpflegegerät, in diesem Fall eine Zahnbürste 10, aufnimmt, ist mit einer Befestigungsausnehmung 126 ausgestattet, die zum Durchgriff für ein Befestigungselement vorbestimmt ist, und eine hängende Präsentation der Einzelverpackung 120 ermöglicht. Die vorliegende Gruppenverpackung 118 bietet den Vorteil, dass bei einer Gesamtpräsentation vieler Verkaufsobjekte jedes einzeln und in beliebiger Reihenfolge entnommen werden kann, ohne die verbleibende Gruppenverpackung 118 zu zerstören. Zudem können die aus der Gruppenverpackung 118 herausgetrennten Einzelverpackungen 120 auch separat aufgehängt und einzeln präsentiert werden. In einer Gruppenverpackung 118 können beispielsweise Zahnbürsten 10 verschiedener Farben, Modelle, Härtegrade, mit verschiedenem Zubehör, Ersatzköpfe für Elektro- oder manuelle Zahnbürsten, Interdentalprodukte, Haarbürsten usw. gemischt oder als Gruppe gleicher Produkte verpackt und präsentiert werden.

Bei der in Fig. 52 gezeigten Gruppenverpackung 118 sind die Blisterträger 122 der Einzelverpackungen 120 rechteckförmig ausgebildet und voneinander durch einen Spalt 128 getrennt. Die Blisterträger 122 sind lediglich mit einer ihrer kürzeren Seiten am Gruppenträger 130 befestigt und auf den andern drei Seiten frei. Dadurch sind die Einzelverpackungen 120 wesentlich leichter und komfortabler aus der Gruppenverpackung 118 herauszulösen. Zwischen dem Blisterträger 122 und dem Gruppenträger 130, ist eine Trennlinie 132 ausgebildet. Bei der gezeigten Ausführungsform der Gruppenverpackung 118 ist die Trennlinie 132 perforiert, um die Einzelverpackungen 120 noch leichter und ohne Zerstörung der Einzelverpackung 120 bzw. der Gruppenverpackung 118 vom Gruppenträger 130 trennen zu können.

Der Gruppenträger 130 ist ebenfalls rechteckförmig ausgebildet und mit zwei weiteren Befestigungsausnehmungen 126 ausgestattet. Durch die Befestigung der Einzelverpackungen 120 entlang ihrer kürzeren Seiten an einer längeren Seite des Gruppenträgers 130 ergibt sich eine kammartige Anordnung. Die Blisterträger 122 sind aus dem gleichen Material beziehungsweise demselben Bogen wie der Gruppenträger 130 hergestellt, aber nur durch eine perforierte Stelle verbunden.

Die Befestigungsausnehmungen 126 des Gruppenträgers 130 sind als Einfach- oder Doppelloch gestaltet. Sie entsprechen standardisierten "Euro"-Löchern. Durch die Befestigungsausnehmungen 126 können Haken, Schnüre, Drähte oder andere Befestigungsmittel, vorzugsweise sogenannte "Euro"-Haken, für eine hängende Präsentation geführt werden.

Der Gruppenträger 130 weist eine mittig, die beiden längeren Seiten verbindende und parallel zu den Spalten 128 verlaufende Falzlinie 134 auf. Die Falzlinie 134 teilt den Gruppenträger 130 in zwei annähernd gleich grosse Teile. Durch ein Falten des Gruppenträgers 130 entlang der Falzlinie 134 kommen die Rückseiten dieser beiden Teile des Gruppenträgers 130 sowie Rückseiten der mit ihnen verbundenen Blisterträger 122 zur Anlage. Aufgrund der symmetrischen Ausbildung der Gruppenverpackung 118 bezüglich der Falzlinie 134 gelangen auch die beiden Befestigungsausnehmungen 126 des Gruppenträgers 130 deckungsgleich übereinander. Im Zusammenwirken mit einem Befestigungselement kann die Gruppenverpackung 118 somit beidseitig präsentiert werden.

Bei der Gruppenverpackung 118 können zur Erhöhung der Stabilität in der gefalteten Lage die beiden Teile des Gruppenträgers 130 aneinander befestigt werden. Diese Befestigung kann mittels verschiedener Befestigungsmedien erfolgen. So können beispielsweise Klammern, insbesondere Metallklammern, Klebstoffe, Nieten, Schweissungen und dergleichen verwendet werden, um die beiden Teile des Gruppenträgers 130 Rücken an Rücken miteinander zu befestigen bzw. aneinander zu fixieren.

In Fig. 53 ist eine weitere Ausführungsform einer Gruppenverpackung 118 gezeigt. Dabei sind sechs Einzelverpackungen 120 über jeweils eine ihrer kürzeren Seiten an einem Gruppenträger 130 befestigt. Der Gruppenträger 130 weist hier zwei zueinander parallel verlaufende Falzlinien 134 auf. Die Falzlinien 134 verlaufen ebenfalls parallel zu den Spalten 128. Sie untergliedern den Gruppenträger 130 in drei nahezu gleich grosse Teile, denen jeweils zwei Einzelverpackungen 120 zugeordnet sind.

Bei einer Faltung der beiden äusseren Teile des Gruppenträgers 130 entlang der Falzlinien 134 um 120° in Richtung der Blisterträger 122 wird ein in Fig. 54 gezeigter Präsentationskörper 136 gebildet. Der Präsentationskörper 136 ist röhrenförmig ausgeformt und besitzt einen dreieckigen Grundriss. Jeweils zwei angrenzende Teile des gefalteten Gruppenträgers 130 schliessen einen Winkel von 60° ein. Die Blisterhauben 124 der Einzelverpackung 120 sind nach aussen gerichtet und erlauben eine dreiseitige Präsentation der Körperpflegegeräte. Durch die drei Befestigungsausnehmungen 126 im Gruppenträger 130 sind jeweils Befestigungsmittel in Form von Fäden 138 gezogen und an einem Haken 140 zusammengeführt. Auf diese Weise kann der röhrenförmig bzw. turmartig ausgebildete Präsentationskörper 136 hängend präsentiert werden.

In Fig. 55 ist eine weitere Ausführungsform einer Gruppenverpackung 118 dargestellt. Dabei sind jeweils Paare von Einzelverpackungen 120 an dem sie rahmenartig umgebenden Gruppenträger 130 entlang einer ihrer kürzeren Seiten befestigt. Die verbleibenden Seiten der Einzelverpackungen 120 sind durch Spalten 128 voneinander bzw. vom rahmenartigen Gruppenträger 130 getrennt.

Jeweils zwischen Paaren von Einzelverpackungen 120 sind am Gruppenträger 130 Falzlinien 134, die parallel zu den Spalten 128 zwischen den Einzelverpackungen 118 verlaufen, ausgebildet. Jeder Teil des Gruppenträgers 130 weist eine Befestigungsausnehmung 126 oberhalb der Trennlinien 132 auf.

Oberhalb des Gruppenträgers 130 sind zusätzlich dreieckige Dachsegmente 142 zwischen den Falzlinien 134 angeformt. Jedes dieser Dachsegmente 142 weist an einer seiner freien Seiten einen trapezförmigen Fixierstreifen 144 auf. Ein weiterer Fixierstreifen 144 ist seitlich aussen am Gruppenträger 130 befestigt.

Wird nun der Gruppenträger 130 entlang der Falzlinien 134 jeweils um 90° in Richtung der Blisterträger 120 gefaltet, so entsteht ein turmartiger Präsentationskörper 136. Der Präsentationskörper 136 ist in Fig. 56 gezeigt und erstreckt sich aufgrund der gleichartig voneinander beabstandeten Falzlinien 134 oberhalb eines quadratischen Grundrisses.

Die Dachsegmente 142 werden ebenfalls zueinander um die zwischen ihnen und dem Gruppenträger 130 ausgebildeten weiteren Falzlinien 134 derart abgewinkelt, dass sich ein geschlossenes, spitz zulaufendes Dach 146 bildet. Mittels der Fixierstreifen 144 können jeweils benachbarte, durch die Faltung in Anlage kommende Dachsegmente 142 bzw. Teile des Gruppenträgers 130 aneinander befestigt werden. Diese Befestigung erhöht die Stabilität des turmartigen Präsentationskörpers 136 und lässt diesen selbstständig aufrecht stehen. Der Präsentationskörper 136 kann ähnlich wie in Fig. 54 gezeigt mit Fäden 138 versehen werden und an einem Haken 140 aufgehängt und vierseitig präsentiert werden.

Alternativ sind auch Präsentationskörper 136 denkbar, deren Seiten jeweils nur eine oder mehr als zwei Einzelverpackungen 120 aufweisen und / oder deren Gruppenträger 130 durch weitere Falzlinien 134 in eine grössere Anzahl von Teilen untergliedert ist, so dass durch ein Falten des Gruppenträgers 130 Präsentationskörper 136 mit einem n-eckigen Grundriss ausgebildet werden, wobei n vorzugsweise die Werte 3, 4, 5, 6, 7 oder 8 annehmen kann.

Neben den Zahnbürsten 10 können auch die im Folgenden beschriebenen Abwaschbürsten 210 mit einem erfindungsgemässen Handgriff, der in diesem Zusammenhang mit dem Bezugszeichen 212 versehen ist, ausgestattet werden. Abwaschbürsten 210 sind dabei ein Beispiel für Bürsten zur manuellen Haushaltsreinigung. Ausser Abwaschbürsten können auch andere Haushaltsbürsten, wie Teller-, Pfannen- und Geschirrbürsten sowie Fegbürsten, Handwischer und Toilettenbürsten oder auch Reinigungsgeräte mit anderen Reinigungselementen, wie zum Beispiel Staubwedel, mit einem Handgriff 212 sowie weiteren, im Zusammenhang mit dem Handgriff 12 für Zahnbürsten 10 genannten Merkmalen ausgestattet sein.

Auch bei der Abwaschbürste 210 ist ein hohler Griffkörper 213 des Handgriffs 212 als Teil eines Bürstenkörpers 214, der an seinem abgewinkelten Kopf 216 mit Borsten 218 besetzt ist, ausgeformt. Über den Hals 220 ist der Griffkörper 213 mit dem Kopf 216 verbunden.

Der Handgriff 212 dient dem Halten der Abwaschbürste 210 mit einer Hand und weist eine Länge zwischen 80 mm und 120 mm, vorzugsweise zwischen 90 mm und 115 mm auf. Der Handgriff 212 ist mit einer länglich-ellipsoidförmigen Aussenkontur ausgestattet und erstreckt sich von einem freien, dem Kopf 216 gegenüberliegenden Ende, an dem ein Ring 221 bzw. ein Haken zum Aufhängen der Abwaschbürste 210 ausgeformt ist, bis zum Ansatz des Halses 220. Der Durchmesser des Handgriffs 212 beträgt zwischen 10 mm und 30 mm, vorzugsweise zwischen 20 mm und 27 mm. Der an den Handgriff 212 anschliessende Hals 220 weist eine Länge zwischen 50 mm und 100 mm, vorzugsweise zwischen 65 mm und 85 mm auf. Der Durchmesser des Halses 220 beträgt zwischen 6 mm und 18 mm, vorzugsweise zwischen 9 mm und 13 mm. Der an den Hals 220 anschliessende Kopf 216 hat eine Länge zwischen 30 mm und 80 mm, vorzugsweise zwischen 50 mm bis 70 mm. Die Gesamtlänge der Abwaschbürste 210 beträgt zwischen 160 mm und 300 mm, vorzugsweise 220 mm und 270 mm.

Diese angegebenen Masse bzw. die äusseren Formen und Konturen sowie die Proportionen der einzelnen Elemente der Abwaschbürste 210 können jedoch variieren und insbesondere einem spezifischen Einsatzzweck angepasst sein. Beispielsweise ist es möglich, die Grösse, Gestalt und den Borstenbesatz des Kopfes 216 der zu reinigenden Umgebung anzupassen oder die Form des Handgriffs 212 für spezifische Handgrössen bzw. Handstellungen ergonomisch besonders vorteilhaft zu gestalten.

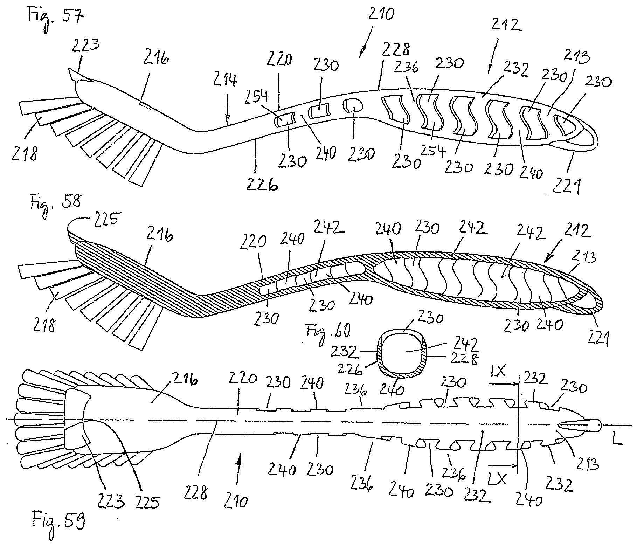

In Analogie zur vorgängig beschriebenen Zahnbürste 10 wird im Folgenden die mit Borsten 218 besetzte Seite der Abwaschbürste 210 als Oberseite 226 bezeichnet, obwohl sie bei der Benutzung der Abwaschbürste 210 vom Benutzer abgewandt ist. Die bei einer Benutzung dem Benutzer zugewandte, beispielsweise in Fig. 59 sichtbare Seite, wird konsequenterweise als Unterseite 228 bezeichnet.

Bei der in Fig. 57 gezeigten Abwaschbürste 210 sind Ausnehmungen 230 in einer seitlichen Wand 232 des Griffkörpers 213 ausgeformt und näherungsweise entlang der Längsachse des Handgriffs 212 angeordnet. Ihre Ausnehmungsöffnungen 254 am Seitenabschnitt 236 zwischen der Oberseite 226 und der Unterseite 228 sind im Wesentlichen wellenförmig gestaltet.

Die sich bezüglich der Längsmittelebene L (siehe Fig. 59) der Abwaschbürste 210 gegenüberliegenden Ausnehmungen 230 sind an den beiden Seitenabschnitten 236 jeweils zueinander versetzt angeordnet. Benachbarte Ausnehmungen 230 jeweils eines Seitenabschnitts 236 sind durch Stege 240 voneinander beabstandet. Die Stege 240 haben eine Breite zwischen 2 mm und 20 mm, vorzugsweise zwischen 5 mm und 10 mm.

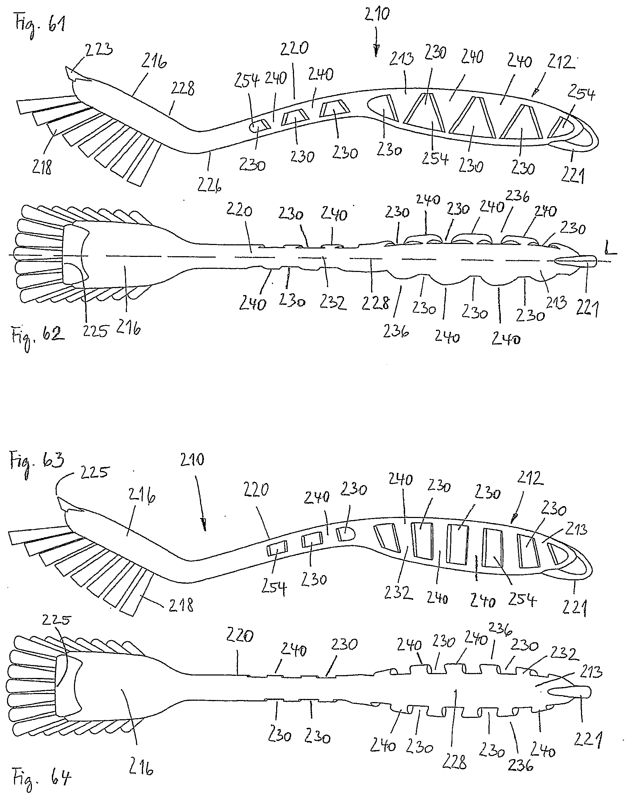

Die Formen der Stege 240, wie auch die Formen der Ausnehmungsöffnungen 254 bzw. der Ausnehmungen 230, können stark variieren. So sind neben den in der Seitenansicht von Fig. 57 gezeigten wellenartigen Grundformen auch trapezartige und dreieckige (Figuren 61 und 62), viereckige, insbesondere rechteckige (Figuren 63 und 64), fünf-, sechs- und achteckige Grundformen möglich. Ebenso denkbar sind sichelförmige Bögen und kombinierte Formen, beispielsweise Dreiecke oder Vierecke mit wellenförmigen Begrenzungslinien. Natürlich sind auch alle Grundformen von Ausnehmungen 30 bzw. deren Ausnehmungsöffnungen 54, die im Zusammenhang mit verschiedenen Ausführungen von Handgriffen 12 für Zahnbürsten 10 beschrieben worden sind, einsetzbar.

Allerdings sind im Unterschied zu den vorgängig beschriebenen Handgriffen 12 für Zahnbürsten 10 bei den Handgriffen 212 für Abwaschbürsten 210 die Ausnehmungen 230 vorzugsweise an Seitenabschnitten 236 der Wände 232 ausgeformt, während die Ausnehmungen 30 bei den Zahnbürsten 10 vorzugsweise zur Oberseite 26 bzw. Unterseite 28 hin geöffnet sind. Diese beiden Arten von Anordnungen der Ausnehmungen 230 sind durch eine Drehung um die Längsachse des Handgriffs 212 um etwa 90° in Umfangsrichtung ineinander überführbar. Allerdings können natürlich sowohl Handgriffe 212 für Abwaschbürsten 210 wie auch Handgriffe 12 für Zahnbürsten mit beiden Arten von Anordnungen ausgestattet sein. Darüber hinaus ist auch nahezu jede in Umfangsrichtung um die Längsachse des Handgriffs 12, 212 versetzte Anordnung von Ausnehmungen 30, 230 denkbar. Die Ausnehmungen im Handgriff 12 werden in diesem Fall entweder durch bewegliche Seitenschieber gebildet, oder die Werkzeugkavitäten sind so ausgebildet, dass die Formtrennung in Längsrichtung des Griffkörpers 213 um 90° verdreht ist. In diesem Fall kann mit stehenden Kernen (analog Fig. 41 - 44) verfahren werden.

Wie insbesondere aus der Schnittdarstellung in Fig. 58 zu entnehmen, münden die Ausnehmungen 230 im Handgriff 212 nach ihrem Durchtritt durch die Wand 232 handgriffinnenseitig in einen Hohlraum 242. Der Hohlraum 242 ist, wie auch der Griffkörper 213 selbst, länglich ausgeformt und erstreckt sich nahezu symmetrisch um die Längsachse des Griffkörpers 213. Wie in Fig. 58 sichtbar, ist der Hohlraum 242 endbereichseitig des Handgriffs 212 abgerundet und jeweils in den Endbereichen geschlossen.

Alternativ ist es natürlich auch möglich, dass der Hohlraum 242 wenigstens zu einem Endbereich hin geöffnet ist, wie dies im Zusammenhang mit Handgriffen 12 für Zahnbürsten 10 bereits erwähnt wurde.

Neben dem Hohlraum 242 im Handgriff 212 ist ebenfalls im Hals 220 ein Hohlraum 242 ausgebildet. Aufgrund der im Vergleich zum Handgriff 212 geringeren Aussenabmessungen des Halses 220 weist dieser Hohlraum 242 kleinere Abmessungen im Vergleich zum Hohlraum 242 im Handgriff 212 auf. Allerdings ist er ebenfalls länglich ausgeformt und erstreckt sich nahezu entlang der Längsachse des Halses 220. Wie der Hohlraum 242 im Handgriff 212, wird auch der Hohlraum 242 im Hals 220 durch sich gegenüberliegende Ausnehmungen 230 - die nun im Hals 220 angeordnet sind - ausgebildet.

Neben der gezeigten Ausführungsform mit zwei voneinander getrennten Hohlräumen 242, einerseits im Handgriff 212 und andererseits im Hals 220, ist es auch möglich, dass diese Hohlräume 242 miteinander verbunden sind und so einen einzigen zusammenhängenden Hohlraum 242 bilden, der sich vom Hals 220 bis in den Handgriff 212 hinein erstreckt. Während im Fall von getrennten Hohlräumen 242 die Anordnung von Ausnehmungen 230 zwischen dem Hangriff 212 und dem Hals 220 unterbrochen ist, sind die Ausnehmungen 230 im letzteren Fall kontinuierlich vom Handgriff 212 über den Hals 220 aneinandergereiht

Wie ebenfalls aus Fig. 58 ersichtlich, ist die Materialstärke, der die Hohlräume 242 begrenzenden Wände 232 im Umfangsrichtung nahezu konstant. Sie beträgt in Bereichen der Stege 240 1 mm bis 5 mm, vorzugsweise 1 mm bis 3 mm.

Die im Wesentlichen konstante Materialstärke der Wände 232 ist auch der Schnittdarstellung in Fig. 60 zu entnehmen. Die Schnittebene LX - LX, die zur Darstellung in Fig. 60 führt, verläuft senkrecht zur Längsachse des Handgriffs 212, wie in Fig. 59 eingezeichnet. Der rechteckförmigabgerundete Aussenquerschnitt des Handgriffs 212 wird aufgrund der nahezu konstanten Materialstärke in verkleinerter Form auf den Hohlraum 242 begrenzenden Querschnitt übertragen. Die in Fig. 60 angeschnittene Wand 232 weist einen U-förmigen Querschnitt auf und ist schraffiert dargestellt.

Der Schnittdarstellung in Fig. 58 ist zu entnehmen, dass bei dieser Ausführungsform einer Abwaschbürste 210 die Längsausdehnungen der dort sichtbaren Ausnehmungen 230 bzw. Stege 240 im Handgriff 212 im Wesentlichen rechtwinklig zur Längsachse des Handgriffs 212 orientiert sind, während sie im Bereich des Halses 220 im Wesentlichen parallel zur Längsachse des Halses 220 orientiert sind. Alternativ sind aufgrund der unterschiedlichen Formen für die Ausnehmungen 230 auch andere Orientierungen bezüglich der jeweiligen Längsachsen möglich.

Da, wie oben bereits erwähnt, die Form und die Versetzung von Ausnehmungen 230 in Umfangsrichtung des Handgriffs 212 bzw. des Halses 220 variabel ist, können verschiedenste Formen von Stegen 240 und Hohlräumen 242 herausgebildet werden. Vorzugsweise sind jedoch in Umfangsrichtung um 180° gegeneinander versetzte, d.h. sich entlang der Längsachsen des Handgriffs 212 bzw. des Halses 220 gegenüberliegende Ausnehmungen 230 ausgeformt. Die jeweils grösste, von aussen sichtbare Ausdehnung ihrer Ausnehmungsöffnungen 254 ist dabei vorzugsweise quer, insbesondere rechtwinklig, oder nahezu parallel zur Längsachse der Abwaschbürste 210 oder den Borsten 218 orientiert.

Im Vergleich zu den vorgängig beschriebenen Zahnbürsten 10 ist der Kopf 216 der Abwaschbürste 210 aufgrund der unterschiedlichen Verwendung stärker gegen die Längsachse des Halses 220 bzw. des Handgriffs 212 geneigt. Der von der Längsachse des Kopfes 216 und der Längsachse des Halses 220 eingeschlossene Winkel beträgt zwischen 110° und 170°, vorzugsweise 135°. Die auf der Oberseite 226 angeordneten Borsten stehen halsseitig nahezu rechtwinklig von der Oberseite 226 ab. In Richtung zum freien Ende des Kopfes 216 verringert sich der Winkel zwischen den Längsachsen der Borsten 218 und der Längsachse des Kopfes 216. Durch graduell verschiedene Ausrichtungen der in Borstenbündeln zusammenstehenden Borsten 218 wird bei einer Reinigungsbewegung, die wenigstens nahezu in Längsrichtung des Kopfes 216 erfolgt, ein verbesserter Reinigungseffekt erzielt.

Im freien Endbereich des Kopfes 216 auf der Unterseite 228 gegenüberliegend den Borsten 218 ist ein Kratzelement 223 angeordnet. Das Kratzelement 223 weist, wie in Fig. 58 sichtbar, einen zu ihrem freien Endbereich spitz zulaufenden, im Wesentlichen dreiecksförmigen Querschnitt auf. Eine äussere und im Wesentlichen rechtwinklig zur Längsachse des Kopfes 216 verlaufende Kante des Kratzelements 223 wird als Kratzkante 225 bezeichnet. Sie dient dem Abschaben bzw. Abkratzen von besonders hartnäckig anhaftenden Verschmutzungen. Wie in Fig. 59 sichtbar, erstreckt sich die Kratzkante 225 des Kratzelements 223 näherungsweise über die gesamte Breite des Kopfes 216.

In den Figuren 61 und 62 ist eine weitere Ausführungsform einer Abwaschbürste 210 mit einem erfindungsgemässen Handgriff 212 gezeigt. Die von aussen sichtbaren Ausnehmungsöffnungen 254 der Ausnehmungen 230 am Handgriff 212 weisen dabei nahezu dreieckige Grundformen auf. Die beiden in Längsrichtung äusseren Ausnehmungen 230 am Handgriff 212 sind der Aussenkontur des Handgriffs 212 angepasst und entsprechend abgerundet gestaltet. Im Bereich des Halses 220 sind die Ausnehmungsöffnungen 254 der Ausnehmungen 230 näherungsweise trapezförmig ausgeformt, wobei ihre Grundform einem Betrachter im Vergleich zur dreieckigen Grundform der Ausnehmungsöffnungen 254 am Handgriff 212 als jeweils oberseitig bzw. unterseitig beschnitten bzw. verkleinert erscheint. Die am kopfseitigen Ende des Halses 220 ausgebildete Ausnehmung 230 ist ebenfalls mit einer abgerundeten Ausnehmungsöffnungen 254 ausgestattet.

Wie in Fig. 62 gezeigt, sind die beiden, bezüglich der Längsmittelebene L der Abwaschbürste 210 gegenüberliegenden Seitenabschnitte 236 asymmetrisch gestaltet. Während die in Fig. 62 zur Fig. 61 orientierte Seite sieben Ausnehmungen 230 aufweist, bei denen jeweils die Basis der dreieckigen Ausnehmungsöffnung 254 unterseitig und somit hier sichtbar ausgeformt ist, weist die gegenüberliegende Seite acht Ausnehmungen 230 auf, deren Spitzen der dreieckigen Ausnehmungsöffnungen 254 sichtbar sind. Bei dieser Ausführungsform sind somit die Ausnehmungen 230 nicht nur bezüglich der Längsachse des Handgriffs 212 bzw. des Halses 220 gegeneinander versetzt angeordnet, sondern die Orientierung ihrer dreieckigen Ausnehmungsöffnungen 254 bezüglich der Unterseite 228 bzw. der Oberseite 226 ist auf beiden Seitenabschnitten 236 der Abwaschbürste 210 verschieden.

In den Fig. 63 und 64 ist eine weitere Ausführungsform einer Abwaschbürste 210 dargestellt. Die im Wesentlichen rechteckförmigen Ausnehmungsöffnungen 254 der Ausnehmungen 230 weisen sowohl am Handgriff 212 als auch am Hals 220 eine im Wesentlichen rechteckförmige Grundform auf. Lediglich jeweils eine ringseitig orientierte Ausnehmung 230 am Handgriff 212 und am Hals 220 ist teilweise abgerundet ausgeformt. Während die Längsausdehnungen der Ausnehmungsöffnungen 254 am Handgriff 212 im Wesentlichen rechtwinklig zur Längsachse des Handgriffs 212 orientiert sind, verlaufen die Längsausdehnungen der Ausnehmungsöffnungen 254 am Hals 220 im Wesentlichen parallel zur Längsachse des Halses 220. Wie Fig. 64 zu entnehmen ist, weisen die beiden Seitenabschnitte 236 der Abwaschbürste 210 jeweils neun Ausnehmungen 230 auf, die bezüglich der Längsachse des Handgriffs 212 bzw. des Halses 220 wiederum jeweils so zueinander versetzt angeordnet sind, dass jeder Ausnehmung 230 jeweils am gegenüberliegenden Seitenabschnitt 236 ein Steg 240 zugeordnet ist.

Die in Fig. 57 bis Fig. 64 gezeigten Ausführungsformen von Abwaschbürsten 210 sind nicht mit einem Prägefeld ausgestattet. Allerdings ist es möglich, entweder auf der Unterseite des Kopfes 216 oder auf den Wänden 232 der Oberseite 226 bzw. Unterseite 228 Beschriftungen, Aufdrucke, Aufkleber und gegebenenfalls auch Prägungen anzubringen. Die Prägungen werden dann wie im Zusammenhang mit den Zahnbürsten 10 erwähnt gefertigt.

Ebenso wie die vorgängig beschriebenen Zahnbürsten 10 können auch die Abwaschbürsten 210 ganz oder teilweise aus einem Hart- und / oder Weichmaterial hergestellt sein. Als Hartmaterialien werden dabei insbesondere PP, PET, PE, PS, SAN, PMMA, ABS und vorzugsweise PP mit einem Elastizitätsmodul von 1000 N/mm² bis 2400 N/mm², vorzugsweise 1300 N/mm² bis 1800 N/mm² eingesetzt. Bei den Weichmaterialien werden TE-LD, PE-HD, PUR, TPE, vorzugsweise TPE mit einer Shore-A-Härte unter 90 verwendet. Es sind dabei, insbesondere im Bereich der Stege 240, Ausführungen mit mehreren Komponenten von Hart-und / oder Weichmaterialien möglich. Die Stege 240 können aus Hartmaterial oder Weichmaterial oder einer Kombination aus Hart- und Weichmaterial bestehen. Je weicher die für die Stege 240 verwendeten Materialien, desto grösser ist die Flexibilität, welche es ermöglicht, dass sich die Wände 232 entlang ihrer Flächennormalen bewegen lassen. In den Fällen, in welchen mehrere Komponenten zum Einsatz kommen, dienen die sich kontinuierlich über die Oberseite 226 bzw. die Unterseite 228 erstreckenden Wände 232 vorzugsweise als Verteilerkanäle für die einzelnen Komponenten. Ebenso ist es möglich, den gesamten Bürstenkörper 214 der Abwaschbürste 210 aus einem Hartmaterial oder einer Kombination aus Hartmaterial und Weichmaterial zu giessen und dabei die zusätzlich ausgebildeten Hohlräume 242 bzw. Ausnehmungen 230 teilweise oder auch ganz mit Weichmaterial zu füllen. Dies ist natürlich ebenso für die Handgriffe 12 von Zahnbürsten 10 möglich. Durch das komplette Füllen der Hohlräume 242 entsteht wiederum eine geschlossene Griffform ohne Öffnungen, es entsteht eine glatte Aussenfläche welche nur durch Übergänge zwischen Hart- und Weichkomponente unterbrochen ist. Die Hartkomponente bildet somit eine Art Skelett welches in Weichmaterial eingebetet ist, und der erfindungsgemässe Hohlraum 242 und die dazu formgebenden Ausnehmungen 230 im Innern des Handgriffes 212 wird mindestens teilweise mit Weichmaterial aufgefüllt. Vorzugsweise wird in diesem Fall ein transparentes oder transluszentes Weichmaterial eingesetzt, um dem Benutzer allenfalls funktionale (z.B. flexible), aber von Weichmaterial umgebene Materialschwächungen im Hartmaterial anzuzeigen.

Wie die Zahnbürsten 10 werden auch die Abwaschbürsten 210 vorzugsweise in einem Spritzgiessverfahren hergestellt. Die dabei verwendeten Spritzgusswerkzeuge 70 sind ebenfalls vorzugsweise zweiteilig ausgeführt und weisen analog zu den in Fig. 41 bis 44 gezeigten Werkzeughälften 72.1, 72.2 Fingerelemente 74 auf, welche die Ausnehmungen 230 und die Hohlräume 242 an der Abwaschbürste 210 ausformen. Ein nicht gezeigter Anspritzpunkt befindet sich vorzugsweise im ringseitigen Endbereich des Handgriffs 212 auf der Unterseite 228 einer sich kontinuierlich sich über den Handgriff 212 erstreckenden Wand 232. Wie bereits im Zusammenhang mit dem Hohlraum 42 von Zahnbürsten 10 erwähnt, können auch die Hohlräume 242 von Abwaschbürsten 210 mit zusätzlichen Verrippungen ausgestattet sein, um dem hohlen Handgriff 212 zusätzliche Stabilität zu verleihen.

Zusammenfassend sei nochmals erwähnt, dass alle beschriebenen Merkmale hinsichtlich der Konstruktion und der Herstellung, wie auch die damit verbundenen Vorteile, sowohl auf Körperpflegeprodukte wie Nassrasierer, Maskarabürsten, insbesondere auf Zahnbürsten 10, wie auch auf Bürsten, insbesondere Abwaschbürsten 210 zu übertragen sind. Bei beiden Gegenständen 10, 210 ist jeweils der Handgriff 12, 212 bzw. der Hals 220 als ein stabiler Hohlkörper ausgeformt, der besonders leicht und mit verringerten Materialkosten zu fertigen ist.

## Patentansprüche

1. Verfahren zur Herstellung eines Handgriffs für ein Bürstenprodukt, welches einen länglichen Griffkörper (13, 213) mit einem von einer Wand (32, 232) umgebenen Hohlraum (42, 242) aufweist, wobei der Griffkörper (13, 213) einstückig ausgebildet ist und die Wand (32, 232) wenigstens zwei durch sie hindurchgehende Ausnehmungen (30, 230) aufweist, die in Umfangsrichtung des Griffkörpers (13, 213) gegeneinander versetzt angeordnet sind und in den Hohlraum (42, 242) münden, wobei bei dem Verfahren Kunststoff in einem Spritzgiessverfahren in eine zusammenhängende Kavität (88) eines Spritzgusswerkzeugs (70) eingespritzt wird, **dadurch gekennzeichnet, dass** die Kavität (88) teilweise durch Fingerelemente (74) begrenzt wird, die sich im geschlossenen Zustand des Spritzgusswerkzeugs (70) abschnittsweise dichtend zur Verhinderung eines Durchflusses von Kunststoff berühren und durch die im fertigen Handgriff (12, 212) die Ausnehmungen (30, 230) und der Hohlraum (42, 242) im Griffkörper (13, 213) geformt werden.

2. Verfahren nach Anspruch 1, **dadurch gekennzeichnet, dass** die Fingerelemente (74) konisch, vorzugsweise unter einem Winkel zwischen 5° bis 15°, vorzugsweise von 10°, zulaufen.

3. Verfahren nach einem der Ansprüche 1 oder 2, **dadurch gekennzeichnet, dass** das Spritzgusswerkzeug (70) in einer Entformungsrichtung (E) trennbare Werkzeughälften (72.1, 72.2) aufweist und die Fingerelemente (74) fest und in Entformungsrichtung (E) verlaufend in den Werkzeughälften (72.1, 72.2) angeordnet sind.

4. Verfahren nach Anspruch 3, **dadurch gekennzeichnet, dass** eine Anzahl von Fingerelementen (74) in den Werkzeughälften (72.1, 72.2) kammartig ausgebildet und derartig gegeneinander versetzt angeordnet sind, dass im zusammengesetzten Zustand der Werkzeughälften (72.1, 72.2) die Fingerelemente (74) der erste Werkzeughälfte (72.1) zwischen die Fingerelemente (74) der zweiten Werkzeughälfte (72.2) eingreifen und sich berühren.

5. Verfahren nach Anspruch 3 oder 4, **dadurch gekennzeichnet, dass** jeweils eine Werkzeughälfte (72.1, 72.2) mit 2 bis 10, vorzugsweise mit 2 bis 5 Ausstossern ausgestattet ist, um das erstarrte Kunststoffteil aus der Werkzeughälfte (72.1, 72.2) zu heben.

6. Verfahren nach Anspruch 1 bis 5, **dadurch gekennzeichnet, dass** das Fingerelement (74) als beweglicher Schieber bzw. Kern, insbesondere Seitenschieber, ausgebildet ist.

7. Verfahren nach einem der Ansprüche 1 bis 6, **dadurch gekennzeichnet, dass** jeweils eine Anzahl von Fingerelementen (74) und / oder ein Fingerelement (74) entlang seiner Längsachse verschiedene Querschnittsformen und -abmessungen aufweisen bzw. aufweist.

8. Verfahren nach einem der Ansprüche 1 bis 7, **dadurch gekennzeichnet, dass** der Griffkörper (13, 213) und insbesondere auch die Stege (40, 240) aus Hartmaterial, Weichmaterial oder einer Kombination aus Hart- und Weichmaterial im Spritzgiessverfahren gefertigt sind.

9. Verfahren nach Anspruch 8, **dadurch gekennzeichnet, dass** ein einziger Anspritzpunkt (46) zum Anspritzen des Hartmaterials und / oder des Weichmaterials in einem freien Endbereich des zu formenden Handgriffs (12, 212) genutzt wird.

10. Verfahren nach Anspruch 8 oder 9, **dadurch gekennzeichnet, dass** bei Verwendung einer Mehrzahl von Hartmaterialien und / oder Weichmaterialien die Fingerelemente (74) und / oder Schieber vor dem Einspritzen eines weiteren Materials mindestens teilweise oder vollständig wieder eingefahren werden, um den Hohlraum (42, 242) frei zu halten und den Griffkörper (13, 213) gegenüber dem Spritzdruck zu stützen.

11. Verfahren nach einem der Ansprüche 1 bis 10, **dadurch gekennzeichnet, dass** der im Innern des Handgriffes (12, 212) gebildete Hohlraum (42, 242) mindestens teilweise mit Weichmaterial aufgefüllt wird.

12. Verfahren nach einem der Ansprüche 1 bis 11, **dadurch gekennzeichnet, dass** während des Spritzgiessens auf Seitenflächen der Zahnbürste (10) ein Beschriftungsfeld (38), welches eine Formtrennlinie des Handgriffes (12) überdeckt bzw. aufspaltet, mittels eines oder mehreren Seitenschiebern geformt wird.

13. Handgriff für ein Bürstenprodukt, aufweisend einen länglichen Griffkörper (13, 213) mit einem von einer Wand (32, 232) umgebenen Hohlraum (42, 242), wobei der Griffkörper (13, 213) einstückig ausgebildet ist und die Wand (32, 232) wenigstens zwei durch sie hindurchgehende Ausnehmungen (30, 230) aufweist und wobei die Ausnehmungen (30, 230) auf gegenüberliegenden Seiten des Griffkörpers (13, 213) gegeneinander versetzt angeordnet sind und in den Hohlraum (42, 242) münden, **dadurch gekennzeichnet, dass** die auf der gleichen Seite ausgeformten Ausnehmungen (30, 230) jeweils in Längsrichtung des Griffkörpers (13, 213) versetzt zu den auf der gegenüberliegenden Seite ausgeformten Ausnehmungen (30, 230) angeordnet sind.

14. Handgriff nach Anspruch 13 **dadurch gekennzeichnet, dass** die Ausnehmungen (30, 230) in Umfangsrichtung des Griffkörpers (13, 230) gegeneinander versetzt angeordnet sind.

15. Handgriff nach Anspruch 14, **dadurch gekennzeichnet, dass** die Ausnehmungen (30, 230) in Umfangsrichtung des Griffkörpers (13, 213) derart gegeneinander versetzt angeordnet sind, dass sich ein geradliniger Durchlass durch den Hohlraum (42, 242) bildet.

16. Handgriff nach Anspruch 13, **dadurch gekennzeichnet, dass** in Längsrichtung des Griffkörpers (13, 213) gegeneinander versetzte Ausnehmungen (30, 230) durch Stege (40, 240) der Wand (32) voneinander beabstandet sind und die Stege (40, 240) vorzugsweise eine im Wesentlichen gleiche Materialstärke und / oder Ausdehnung in Längsrichtung des Griffkörpers (13, 213) aufweisen.

17. Handgriff nach einem der Ansprüche 13 bis 16, **dadurch gekennzeichnet, dass** der Hohlraum (42, 242) wenigstens einseitig in Längsrichtung des Griffkörpers (13, 213) geschlossen ist.

18. Handgriff nach einem der Ansprüche 13 bis 17, **dadurch gekennzeichnet, dass** die Ausnehmungen (30, 230) und / oder Querschnitte des Hohlraums (42, 242) oval, kreisförmig, halbmondförmig, sichelförmig, quadratisch und / oder n-eckig ausgeformt sind und / oder Umrisse von Figuren und / oder Tieren aufweisen.

19. Handgriff nach einem der Ansprüche 13 bis 18, **dadurch gekennzeichnet, dass** die Ausnehmungen (30, 230) eines einzelnen Handgriffs (12, 212) unterschiedliche Formen und / oder Abmessungen aufweisen.

20. Handgriff nach einem der Ansprüche 13 bis 19, **dadurch gekennzeichnet, dass** die Ausnehmungen (30, 230) eine gleichartige Form aufweisen und in ihren Abmessungen ihrer Position am Griffkörper (13, 213) entsprechend dem Umfang des Griffkörpers (13, 213) angepasst sind.

21. Handgriff nach einem der Ansprüche 13 bis 20, **dadurch gekennzeichnet, dass** der Hohlraum (42, 242) länglich ausgebildet ist und sich die Längsachse des Hohlraums (42, 242) koaxial bezüglich der Längsachse des Griffkörpers (13, 213) erstreckt.

22. Handgriff nach einem der Ansprüche 13 bis 21, **dadurch gekennzeichnet, dass** der Griffkörper (13) auf seiner abgerundeten Aussenkontur seitlich, vorzugsweise ein- oder zweiseitig, ein Feld (38) zur Beschriftung aufweist.

23. Handgriff nach einem der Ansprüche 13 bis 22, **dadurch gekennzeichnet, dass** der Griffkörper (13, 213) beziehungsweise die Stege (40, 240) aus Hartmaterial, Weichmaterial oder einer Kombination aus Hart- und Weichmaterial gefertigt ist bzw. sind.

24. Handgriff nach einem der Ansprüche 13 bis 23, **dadurch gekennzeichnet, dass** der Handgriff Ausnehmungen (230) und einen Hohlraum (242) aufweist, mit einem an den Handgriff (212) anschliessenden Hals (220) und mit einem gegenüber dem Handgriff (212) am Hals (220) angeordneten Kopf (216), welcher auf seiner Oberseite (226) mit Borsten (218) besetzt ist.

25. Handgriff nach Anspruch 24, **dadurch gekennzeichnet, dass** weitere Ausnehmungen (230) und ein weiterer Hohlraum (242) am Hals (20) ausgebildet sind oder dass sich ein einziger Hohlraum (242) vom Handgriff (212) bis in den Hals (220) erstreckt.

26. Verwendung eines Handgriffs nach einem der Ansprüche 13 bis 25 in einer Zahnbürste oder in einer Haushaltsbürste, insbesondere einer Abwaschbürste.

## Claims

1. Method of producing a handle for a brush product which has an elongate handle body (13, 213) with a cavity (42, 242) enclosed by a wall (32, 232), wherein the handle body (13, 213) is formed in one piece and the wall (32, 232) has at least two recesses (30, 230) which pass through it, are offset in relation to one another in the circumferential direction of the handle body (13, 213) and open out into the cavity (42, 242), wherein in the case of the method plastic is injected, in an injection-molding process, into a continuous cavity (88) of an injection mold (70), **characterized in that** the cavity (88) is bounded, in part, by finger elements (74) which, in the closed state of the injection mold (70), are in sealing contact, in certain sections, to prevent the throughflow of plastic and which form, in the finished handle (12, 212), the recesses (30, 230) and the cavity (42, 242) in the handle body (13, 213).

2. Method according to Claim 1, **characterized in that** the finger elements (74) taper conically, preferably at an angle between 5° and 15°, preferably of 10°.

3. Method according to either of Claims 1 and 2, **characterized in that** the injection mold (70) has mold halves (72.1, 72.2) which can be separated in a demolding direction (E), and the finger elements (74) are fixed in the mold halves (72.1, 72.2) such that they run in the demolding direction (E).

4. Method according to Claim 3, **characterized in that** a number of finger elements (74) are formed in a comb-like manner in the mold halves (72.1, 72.2) and are offset in relation to one another such that, when the mold halves (72.1, 72.2) are put together, the finger elements (74) of the first mold half (72.1) engage between the finger elements (74) of the second mold half (72.2) and are in contact therewith.

5. Method according to Claim 3 or 4, **characterized in that** in each case one mold half (72.1, 72.2) is provided with 2 to 10, preferably with 2 to 5, ejectors in order to lift the solidified plastic part out of the mold half (72.1, 72.2).

6. Method according to Claims 1 to 5, **characterized in that** the finger element (74) is designed as a movable slide or core, in particular lateral slide.

7. Method according to one of Claims 1 to 6, **characterized in that** in each case a number of finger elements (74) and/or a finger element (74) have/has different cross-sectional shapes and dimensions along the longitudinal axis.

8. Method according to one of Claims 1 to 7, **characterized in that** the handle body (13, 213) and in particular also the webs (40, 240) are produced in the injection-molding process from hard material, soft material or a combination of hard and soft materials.

9. Method according to Claim 8, **characterized in that** a single injection point (46) is used for applying the hard material and/or the soft material by injection in a free end region of the handle (12, 212) which is to be formed.

10. Method according to Claim 8 or 9, **characterized in that**, if use is made of a number of hard materials and/or soft materials, the finger elements (74) and/or slides are at least partially or fully moved in again, prior to a further material being injected, in order to keep the cavity (42, 242) free and to support the handle body (13, 213) in relation to the injection pressure.

11. Method according to one of Claims 1 to 10, **characterized in that** the cavity (42, 242) formed in the interior of the handle (12, 212) is filled, at least in part, with soft material.

12. Method according to one of Claims 1 to 11, **characterized in that**, during injection molding, a text panel (38) is formed on side surfaces of the toothbrush (10) by means of one or more lateral slides, the text panel covering over and/or dividing up a mold-separating line of the handle (12).

13. Handle for a brush product, having an elongate handle body (13, 213) with a cavity (42, 242) enclosed by a wall (32, 232), wherein the handle body (13, 213) is formed in one piece and the wall (32, 232) has at least two recesses (30, 230) which pass through it and wherein the recesses (30, 230) are offset in relation to one another on opposite sides of the handle body (13, 213) and open out into the cavity (42, 242), **characterized in that** the recesses (30, 230) formed on the same side are offset in each case in the longitudinal direction of the handle body (13, 213) in relation to the recesses (30, 230) which are formed in the opposite side.

14. Handle according to Claim 13, **characterized in that** the recesses (30, 230) are offset in relation to one another in the circumferential direction of the handle body (13, 230).

15. Handle according to Claim 14, **characterized in that** the recesses (30, 230) are offset in relation to one another in the circumferential direction of the handle body (13, 213) so as to form a rectilinear through-passage through the cavity (42, 242).

16. Handle according to Claim 13, **characterized in that** recesses (30, 230) offset in relation to one another in the longitudinal direction of the handle body (13, 213) are spaced apart from one another by webs (40, 240) of the wall (32), and the webs (40, 240) preferably have an essentially identical material thickness and/or extent in the longitudinal direction of the handle body (13, 213).

17. Handle according to one of Claims 13 to 16, **characterized in that** the cavity (42, 242) is closed at least on one side in the longitudinal direction of the handle body (13, 213).

18. Handle according to one of Claims 13 to 17, **characterized in that** the recesses (30, 230) and/or cross sections of the cavity (42, 242) are oval, circular, halfmoon-shaped, sickle-shaped, square and/or n-sided and/or form outlines of figures and/or animals.

19. Handle according to one of Claims 13 to 18, **characterized in that** the recesses (30, 230) of an individual handle (12, 212) have different shapes and/or dimensions.

20. Handle according to one of Claims 13 to 19, **characterized in that** the recesses (30, 230) have the same shape and are adapted in dimension, in accordance with their position on the handle body (13, 213), to the circumference of the handle body (13, 213).

21. Handle according to one of Claims 13 to 20, **characterized in that** the cavity (42, 242) is elongate, and the longitudinal axis of the cavity (42, 242) extends coaxially in relation to the longitudinal axis of the handle body (13, 213).

22. The handle according to one of Claims 13 to 21, **characterized in that**, on its rounded outer contour, the handle body (13) has a panel (38) for applying text laterally, preferably on one side or two sides.

23. Handle according to one of Claims 13 to 22, **characterized in that** the handle body (13, 213) and/or the webs (40, 240) is/are produced from hard material, soft material or a combination of hard and soft materials.

24. Handle according to one of Claims 13 to 23, **characterized in that** the handle has recesses (230) and a cavity (242), with a neck (220) adjoining the handle (212), and with a head (216) which is arranged on the neck (220), opposite the handle (212), and is covered with bristles (218) on its top side (226).

25. Handle according to Claim 24, **characterized in that** further recesses (230) and a further cavity (242) are formed on the neck (20), or **in that** a single cavity (242) extends from the handle (212) into the neck (220).

26. Use of a handle according to one of Claims 13 to 25 in a toothbrush or in a household brush, in particular a dishwashing brush.

## Revendications

1. Procédé de fabrication d'une poignée pour une brosse, qui présente un corps de saisie allongé (13, 213) avec une cavité (42, 242) entourée par une paroi (32, 232), dans lequel le corps de saisie (13, 213) est réalisé d'une seule pièce et la paroi (32, 232) présente au moins deux évidements (30, 230) qui la traversent, qui sont décalés l'un par rapport à l'autre dans la direction périphérique du corps de saisie (13, 213) et qui débouchent dans la cavité (42, 242), dans lequel concernant le procédé on injecte une matière plastique selon un procédé de moulage par injection dans une cavité continue (88) d'un outil de moulage par injection (70), **caractérisé en ce qu'**on limite la cavité (88) partiellement au moyen d'éléments de doigt (74), qui dans l'état fermé de l'outil de moulage par injection (70) se touchent localement de façon étanche afin d'empêcher un écoulement de matière plastique et par lesquels on forme les évidements (30, 230) et la cavité (42, 242) dans le corps de saisie (13, 213) dans la poignée terminée (12, 212).

2. Procédé selon la revendication 1, **caractérisé en ce que** les éléments de doigt (74) se terminent sous forme conique, de préférence avec un angle compris entre 5° et 15°, de préférence de 10°.

3. Procédé selon une des revendications 1 et 2, **caractérisé en ce que** l'outil de moulage par injection (70) présente des moitiés d'outil (72.1, 72.2) séparables dans une direction de démoulage et les éléments de doigt (74) sont disposés de façon fixe et s'étendant dans la direction de démoulage (E) dans les moitiés d'outil (72.1, 72.2).

4. Procédé selon la revendication 3, **caractérisé en ce qu'**un certain nombre d'éléments de doigt (74) sont formés en forme de peigne dans les moitiés d'outil (72.1, 72.2) et sont décalés l'un par rapport à l'autre de telle manière que dans l'état assemblé des moitiés d'outil (72.1, 72.2) les éléments de doigt (74) de la première moitié d'outil (72.1) s'engagent et se touchent entre les éléments de doigt (74) de la deuxième moitié d'outil (72.2).

5. Procédé selon la revendication 3 ou 4, **caractérisé en ce qu'**une moitié d'outil (72.1, 72.2) est respectivement équipée de 2 à 10, de préférence de 2 à 5 éjecteurs, afin de soulever la pièce de matière plastique solidifiée hors de la moitié d'outil (72.1, 72.2).

6. Procédé selon une revendication 1 à 5, **caractérisé en ce que** l'élément de doigt (74) est constitué par un coulisseau ou un noyau mobile, en particulier un coulisseau latéral.

7. Procédé selon l'une quelconque des revendications 1 à 6, **caractérisé en ce que** plusieurs éléments de doigt (74) et/ou un élément de doigt (74) présente(nt) le long de son/leur axe longitudinal des formes et des dimensions de section transversale différentes.

8. Procédé selon l'une quelconque des revendications 1 à 7, **caractérisé en ce que** le corps de saisie (13, 213) et en particulier aussi les nervures (40, 240) sont fabriqués en matériau dur, en matériau souple ou en une combinaison de matériau dur et de matériau souple par un procédé de moulage par injection.

9. Procédé selon la revendication 8, **caractérisé en ce que** l'on utilise un seul point d'injection (46) pour l'injection du matériau dur et/ou du matériau souple dans une région d'extrémité libre de la poignée à mouler (12, 212).

10. Procédé selon la revendication 8 ou 9, **caractérisé en ce que** lorsque l'on utilise une multiplicité de matériaux durs et/ou de matériaux souples les éléments de doigt (74) et/ou les coulisseaux sont de nouveau introduits au moins partiellement ou entièrement avant l'injection d'un autre matériau, afin de garder la cavité (42, 242) libre et de soutenir le corps de saisie (13, 213) par rapport à la pression d'injection.

11. Procédé selon l'une quelconque des revendications 1 à 10, **caractérisé en ce que** la cavité (42, 242) formée à l'intérieur de la poignée (12, 212) est remplie au moins en partie par du matériau souple.

12. Procédé selon l'une quelconque des revendications 1 à 11, **caractérisé en ce que** pendant le moulage par injection on forme sur des faces latérales de la brosse à dents (10), au moyen d'un ou de plusieurs coulisseaux latéraux, un zone d'écriture (38), qui recouvre ou divise un joint de moulage de la poignée (12).

13. Poignée pour une brosse, présentant un corps de saisie allongé (13, 213) avec une cavité (42, 242) entourée par une paroi (32, 232), dans laquelle le corps de saisie (13, 213) est réalisé d'une seule pièce et la paroi (32, 232) présente au moins deux évidements (30, 230) qui la traversent et dans laquelle les évidements (30, 230) sont disposés sur des côtés opposés du corps de saisie (13, 213) et sont décalés l'un par rapport à l'autre et débouchent dans la cavité (42, 242), **caractérisée en ce que** les évidements (30, 230) formés sur le même côté sont respectivement décalés dans la direction longitudinale du corps de saisie (13, 213) par rapport aux évidements (30, 230) formés sur le côté opposé.

14. Poignée selon la revendication 13, **caractérisée en ce que** les évidements (30, 230) sont décalés l'un par rapport à l'autre dans la direction périphérique du corps de saisie (13, 230).

15. Poignée selon la revendication 14, **caractérisée en ce que** les évidements (30, 230) sont décalés l'un par rapport à l'autre dans la direction périphérique du corps de saisie (13, 213), de telle manière qu'il se forme un passage rectiligne à travers la cavité (42, 242).

16. Poignée selon la revendication 13, **caractérisée en ce que** des évidements (30, 230) décalés l'un par rapport à l'autre dans la direction longitudinale du corps de saisie (13, 213) sont espacés l'un de l'autre par des nervures (40, 240) de la paroi (32) et les nervures (40, 240) présentent de préférence une épaisseur de matériau et/ou une extension dans la direction longitudinale du corps de saisie (13, 213) essentiellement identique.

17. Poignée selon l'une quelconque des revendications 13 à 16, **caractérisée en ce que** la cavité (42, 242) est fermée au moins sur un côté dans la direction longitudinale du corps de saisie (13, 213).

18. Poignée selon l'une quelconque des revendications 13 à 17, **caractérisée en ce que** les évidements (30, 230) et/ou les sections transversales de la cavité (42, 242) sont de forme ovale, circulaire, en forme de demi-lune, en forme de croissant, carrée et/ou polygonale à n côtés et/ou présentent des contours de figures et/ou d'animaux.

19. Poignée selon l'une quelconque des revendications 13 à 18, **caractérisée en ce que** les évidements (30, 230) d'une poignée isolée (12, 212) présentent des formes et/ou des dimensions différentes.

20. Poignée selon l'une quelconque des revendications 13 à 19, **caractérisée en ce que** les évidements (30, 230) présentent une forme identique et leurs dimensions sont adaptées à leur position sur le corps de saisie (13, 213) selon la périphérie du corps de saisie (13, 213).

21. Poignée selon l'une quelconque des revendications 13 à 20, **caractérisée en ce que** la cavité (42, 242) est de forme allongée et l'axe longitudinal de la cavité (42, 242) s'étend de façon coaxiale par rapport à l'axe longitudinal du corps de saisie (13, 213).

22. Poignée selon l'une quelconque des revendications 13 à 21, **caractérisée en ce que** le corps de saisie (13) présente sur son contour extérieur arrondi, latéralement, de préférence sur un ou sur deux côté(s), une zone (38) destinée à une inscription.

23. Poignée selon l'une quelconque des revendications 13 à 22, **caractérisée en ce que** le corps de saisie (13, 213) ou les nervures (40, 240) est ou sont fabriqué(es) en matériau dur, en matériau souple ou en une combinaison de matériau dur et de matériau souple.

24. Poignée selon l'une quelconque des revendications 13 à 23, **caractérisée en ce que** la poignée présente des évidements (230) et une cavité (242), avec un col (220) se raccordant à la poignée (212) et avec une tête (216) disposée sur le col (220) à l'opposé de la poignée (212), qui est garnie de poils (218) sur son côté supérieur (226).

25. Poignée selon la revendication 24, **caractérisée en ce que** d'autres évidements (230) et une autre cavité (242) sont formés sur le col (20) ou **en ce qu'**une seule cavité (242) s'étend de la poignée (212) jusque dans le col (220).

26. Utilisation d'une poignée selon l'une quelconque des revendications 13 à 25 dans une brosse à dents ou dans une brosse de ménage, en particulier une brosse à vaisselle.
